# EUROPEAN PATENT APPLICATION

(11) **EP 4 661 339 A1**
(43) Date of publication of application: **10.12.2025**
(21) Application number: 24762945.4
(22) Date of filing: 31.01.2024
(51) Int. Cl.: H04L 9/40

(54) **COMMUNICATION METHOD AND COMMUNICATION APPARATUS**

(30) Priority: 28.02.2023 CN 202310223101
(71) Applicant: Huawei Technologies Co., Ltd., Shenzhen, Guangdong 518129 (CN)
(72) Inventor: GUO, Tao, Shenzhen, Guangdong 518129 (CN); WU, Yizhuang, Shenzhen, Guangdong 518129 (CN); LIU, Wenfeng, Shenzhen, Guangdong 518129 (CN)
(74) Representative: Grünecker Patent- und Rechtsanwälte PartG mbB
(86) International application number: PCT/CN2024/074897
(87) International publication number: WO 2024/179262

(57) **Abstract**

Embodiments of this application provide a communication method and a communication apparatus. The method includes: A second network function network element receives a service request message from a first network function network element, and determines, based on a first token, whether to provide a service for the first network function network element. The service request message is used to request the second network function network element to provide the service for the first network function network element, the service request message includes the first token and second service domain information, the second service domain information indicates a service area of the service requested by the first network function network element, the first token includes first service domain information, and the first service domain information indicates a service area range in which the first network function network element is capable of obtaining the service from the second network function network element. In the solution of this application, the first service domain information is added to the first token, to reduce or avoid occurrences that the first network function network element accesses the service without authorization, thereby ensuring network security.

## Description

This application claims priority to Chinese Patent Application No. 202310223101.4, filed with the China National Intellectual Property Administration on February 28, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In a service-based architecture (service-based architecture, SBA), network function (network function, NF) network elements interact with each other over service-based interfaces. For example, after obtaining an access token (access token), a network function service consumer (NF service consumer, NFc) may request a service from a network function service producer (NF service producer, NFp). To improve communication security, the NFp needs to perform, based on the access token, authorization check on the service requested by the NFc, that is, check whether the NFc is authorized to use the requested service.

However, in a current OAuth authentication mechanism, the NFc may use the access token to access the service without authorization, and consequently, network security cannot be ensured. Therefore, there is an urgent need for additional coping measures to mitigate potential security risks.

### SUMMARY

This application provides a communication method and a communication apparatus, to prevent malicious network function service consumers from obtaining services by using an access token without authorization, so as to ensure network security.

According to a first aspect, a communication method is provided. The method may be performed by a second network function network element, or may be performed by a chip or a circuit used in the second network function network element. This is not limited in this application. For ease of description, an example in which the method is performed by the second network function network element is used for description below.

The method includes: The second network function network element receives a service request message from a first network function network element, where the service request message is used to request the second network function network element to provide a service for the first network function network element, the service request message includes a first token and second service domain information, the second service domain information indicates a service area of the service requested by the first network function network element, the first token includes first service domain information, and the first service domain information indicates a service area range in which the first network function network element is capable of obtaining the service from the second network function network element; and the second network function network element determines, based on the first token, whether to provide the service for the first network function network element.

According to the solution provided in this application, in a process in which the first network function network element requests the service from the second network function network element, the second network function network element determines, based on the first service domain information in the first token carried in the service request message, whether to provide the service for the first network function network element, so that a malicious NF service consumer can be prevented from obtaining the service by using the first token without authorization, thereby ensuring network security.

For example, the service that the first network function network element requests the second network function network element to provide may be any one of the following services: a data collection service, a model obtaining service, a protocol data unit (protocol data unit, PDU) session service, a session management (session management, SM) policy control service, a registration service, or the like.

With reference to the first aspect, in some implementations of the first aspect, when the service is the data collection service, the first service domain information indicates an area range in which the first network function network element is capable of obtaining data from the second network function network element; or when the service is the model obtaining service, the first service domain information indicates an area range in which the first network function network element is capable of obtaining a model from the second network function network element.

A service area range for obtaining a service may be understood as an area range for obtaining a service corresponding resource of the service. In a resource obtaining service, a service area range of the service may be understood as an area range for obtaining a service corresponding resource of the service. For example, when the resource is data, a model, a protocol data unit, or the like, the service area range of the service may be an area range for obtaining the corresponding data, an area range for obtaining the model, an area range for obtaining the protocol data unit, or the like. In other words, the first network function network element can obtain data or a model in the service area range, or the first network function network element has permission to request the second network function network element to provide data or a model in the service area range.

For example, a service area range of the data collection service indicates a service area range of data that can be obtained by the first network function network element by using the data collection service. In other words, the first network function network element has permission to request the second network function network element to provide data in the service area range.

For example, a service area range of the model obtaining service indicates an area range of a model that can be obtained by the first network function network element by using the model obtaining service. In other words, the first network function network element has permission to request the second network function network element to provide a model in the service area range.

The second network function network element may be a service providing network element, and the first network function network element may be a service requesting network element. That the second network function network element determines, based on the first token, whether to provide the service for the first network function network element may be understood as that the second network function network element determines, based on the first service domain information in the first token, whether the first network function network element is authorized to use the service; or may be understood as that the second network function network element determines, based on the first service domain information in the first token, to provide the service for the first network function network element or refuse to provide the service for the first network function network element; or may be understood as that the second network function network element provides the requested service (or performs the service) based on the first service domain information in the first token, and sends a response message, or sends a response message indicating that the service request fails; or may be understood as that the second network function network element provides the requested service (or performs the service) based on the first service domain information in the first token, and sends a response message, or sends a response message indicating that the service request is rejected.

A specific representation form in which the second network function network element determines whether to provide the service for the first network function network element may be as follows: When the first network function network element is authorized to use the service, the second network function network element provides the service for the first network function network element; or when the first network function network element is not authorized to use the service, the second network function network element rejects the service request message, to reject the first network function network element that requests the service.

For example, the first service domain information includes one or more of the following: service area information, serving cell information, area of interest information, tracking area identity information, or the like. The first token may include an additional scope field and a claims (claims) field. Optionally, the additional scope field includes the first service domain information, or the first service domain information is carried in a separate information element. This is not limited in this application.

With reference to the first aspect, in some implementations of the first aspect, that the second network function network element determines, based on the first token, whether to provide the service for the first network function network element includes: The second network function network element performs verification on the first token; and when the verification on the first token succeeds, the second network function network element determines to provide the service for the first network function network element.

Based on this implementation, the second network function network element may provide the service for the first network function network element when the verification on the first token succeeds. This can prevent a malicious NF service consumer from obtaining the service by using the first token without authorization, thereby reducing a potential security risk.

With reference to the first aspect, in some implementations of the first aspect, that the second network function network element performs verification on the first token includes: The second network function network element performs verification on integrity protection of the first token; when the verification on the integrity protection of the first token succeeds, the second network function network element determines whether the service area indicated by the second service domain information belongs to the service area range indicated by the first service domain information; and when the service area indicated by the second service domain information belongs to the service area range indicated by the first service domain information, the second network function network element determines that the verification on the first token succeeds.

It should be understood that security protection, for example, integrity protection, is performed on the first token, so that a malicious NF service consumer can be prevented from tampering with a parameter in the first token.

Based on this implementation, the second network function network element determines, based on whether the service area indicated by the second service domain information belongs to the service area range indicated by the first service domain information, whether the first network function network element is authorized to use the service or whether to provide the service for the first network function network element. This can prevent a malicious NF service consumer from obtaining the service by using the first token without authorization, thereby reducing a potential security risk.

With reference to the first aspect, in some implementations of the first aspect, when the first network function network element is a data collection coordination function network element, the service request message further includes a client credentials assertion (client credentials assertion, CCA), the CCA includes an identifier of a third network function network element and third service domain information, and the third service domain information indicates a service area of the service requested by the third network function network element.

Based on this implementation, it may be understood that the third network function network element requests to obtain the data collection service from the second network function network element by using the data collection coordination function network element, and the CCA is used by the second network function network element to perform identity verification on the third network function network element.

With reference to the first aspect, in some implementations of the first aspect, the second network function network element determines, based on the CCA, whether to provide the service for the first network function network element. Specifically, the second network function network element determines whether the service area indicated by the second service domain information is included in a service area range indicated by the third service domain information carried in the CCA; and when the service area indicated by the second service domain information is included in the service area range indicated by the third service domain information carried in the CCA, the second network function network element determines that verification on the CCA succeeds, and then determines to provide the service for the first network function network element.

Based on this implementation, verification is added to check whether the service area indicated by the second service domain information is included in the service area range indicated by the third service domain information carried in the CCA, to verify whether a third-party entity (for example, a data collection coordination function network element), as a transferor of the service request message, maliciously tampers with a request of the third network function network element. This can prevent a malicious NF service consumer from obtaining the service without authorization, thereby further ensuring network communication security, and reducing a potential security risk.

In other words, when the service request message includes the first token, the second network function network element determines, based on the first token, whether to provide the service (for example, data or a model) for the first network function network element. Further, when the service request message further includes the CCA, the second network function network element may further determine, based on the CCA, whether to provide the service for the first network function network element, to enhance security verification, prevent a malicious NF service consumer from obtaining the service without authorization, and improve communication reliability.

With reference to the first aspect, in some implementations of the first aspect, the service request message further includes an identifier of the first network function network element, the first token further includes an identifier of the first network function network element and an identifier of the third network function network element, and that the second network function network element performs verification on the first token further includes: The second network function network element determines whether the identifier of the third network function network element carried in the first token is the same as the identifier of the third network function network element carried in the CCA, and whether the identifier of the first network function network element carried in the first token is the same as the identifier of the first network function network element carried in the service request message; and when the identifier of the first network function network element carried in the first token is the same as the identifier of the first network function network element carried in the CCA, and the identifier of the first network function network element carried in the first token is the same as the identifier of the first network function network element carried in the service request message, the second network function network element determines that the verification on the first token succeeds.

Based on this implementation, verification on the network element identifier is added, that is, verification is performed to check whether the identifier of the third network function network element carried in the first token is the same as the identifier of the third network function network element carried in the CCA, and verification is performed to check whether the identifier of the first network function network element carried in the first token is the same as the identifier of the first network function network element carried in the service request message. This can prevent a malicious NF service consumer from obtaining the service without authorization, thereby further ensuring network communication security, and reducing a potential security risk.

With reference to the first aspect, in some implementations of the first aspect, the first token further includes another verification condition, and the method further includes: The second network function network element determines, based on the another verification condition, whether to provide the service for the first network function network element, where the another verification condition includes one or more of the following: an NF instance identifier of a service provider, an NF type of the service provider, single network slice selection assistance information of the service provider, a network slice instance identifier of the service provider, an expected identifier of an NF set to which the service provider belongs, an expected service name, and a validity time of the first token.

Based on this implementation, the second network function network element adds verification on the another verification condition, and determines, based on whether the verification succeeds, whether to provide the service for the first network function network element. This can effectively ensure network communication security, and prevent a malicious NF service consumer from obtaining the service by using the first token without authorization.

With reference to the first aspect, in some implementations of the first aspect, when the verification based on the another verification condition succeeds, the second network function network element determines that the verification on the first token succeeds.

Based on this implementation, a case in which verification based on the service area information succeeds and verification based on the another verification condition succeeds is added, so that a malicious NF service consumer can be more effectively prevented from obtaining the service by using the first token without authorization, thereby further ensuring network communication security, and reducing or even avoiding a potential security risk.

With reference to the first aspect, in some implementations of the first aspect, when any one of the following conditions is met, the second network function network element determines that the verification on the first token fails; and the second network function network element rejects provision of the service for the first network function network element. The condition includes one or more of the following: The service area indicated by the second service domain information is outside the service area range indicated by the first service domain information; the service area indicated by the second service domain information is outside the service area range indicated by the third service domain information carried in the CCA; the identifier of the third network function network element carried in the first token is different from the identifier of the third network function network element carried in the CCA; the identifier of the first network function network element carried in the first token is different from the identifier of the first network function network element carried in the service request message; or the verification based on the another verification condition fails.

A specific representation form in which the second network function network element rejects provision of the service for the first network function network element may be: The second network function network element sends a service response message to the first network function network element, where the service response message indicates that provision of the service is rejected, or the response message indicates that the service request fails. Optionally, the service response message further includes a rejection cause. For example, the rejection cause may be that the verification of the first token fails, or the service area indicated by the second service domain information is outside the service area range indicated by the first service domain information.

Based on this implementation, in a process of performing verification on the first token, provided that any one of the foregoing cases occurs, it may be determined that the verification on the first token fails, and provision of the service is rejected. In this way, a malicious NF service consumer can be more effectively prevented from obtaining the service by using the first token without authorization, thereby further ensuring network communication security, and reducing or even avoiding a potential security risk.

With reference to the first aspect, in some implementations of the first aspect, the first service domain information indicates a service area range allowed by a capability of obtaining the service by the first network function network element; or the first service domain information indicates a service area range in which an authorization function network element authorizes the first network function network element to obtain the service; or the first service domain information indicates an authorized service area range of the service authorized to the first network function network element.

Optionally, the first service domain information may be determined based on a service request range carried in a token request message of the first network function network element, or the first service domain information may be determined by the authorization function network element based on a capability that is of obtaining the service by the first network function network element and that is indicated by a locally stored NF profile of the first network function network element. This is not limited in this application.

Based on this implementation, the first service domain information is carried in the first token, to ensure that when subsequently receiving a service request of the first network function network element, the second network function network element can determine, by performing verification on the first service domain information, whether to provide a service for the first network function network element, so as to prevent a malicious NF service consumer from obtaining the service by using the first token without authorization, thereby further ensuring network communication security, and reducing or even avoiding a potential security risk.

With reference to the first aspect, in some implementations of the first aspect, the service area indicated by the second service domain information is included in the service area range indicated by the first service domain information.

Based on this implementation, the service area indicated by the second service domain information is limited to being included in the service area range indicated by the first service domain information, and the service area indicated by the second service domain information is limited to being included in the service area range indicated by the third service domain information. This can avoid unauthorized access by the first network function network element, to ensure that the second network function network element successfully verifies the first token subsequently, and provides the service for the first network function network element, thereby improving user experience.

According to a second aspect, a communication method is provided. The method may be performed by a first network function network element, or may be performed by a chip or a circuit used in the first network function network element. This is not limited in this application. For ease of description, an example in which the method is performed by the first network function network element is used for description below.

The method includes: The first network function network element obtains a first token, where the first token includes first service domain information, and the first service domain information indicates a service area range in which the first network function network element is capable of obtaining a service from a second network function network element; the first network function network element sends a service request message to the second network function network element, where the service request message is used to request the second network function network element to provide the service for the first network function network element, the service request message includes the first token and second service domain information, and the second service domain information indicates a service area of the service requested by the first network function network element; and the first network function network element receives the service from the second network function network element.

For example, the service requested by the first network function network element may be a data collection service or a model obtaining service. When the service is the data collection service, the first service domain information indicates an area range in which the first network function network element is capable of obtaining data from the second network function network element; or when the service is the model obtaining service, the first service domain information indicates an area range in which the first network function network element is capable of obtaining a model from the second network function network element.

According to the solution provided in this application, in a process in which the first network function network element requests the service from the second network function network element, the second network function network element determines, based on the first service domain information in the first token carried in the service request message, whether to provide the service for the first network function network element, so that a malicious NF service consumer can be prevented from obtaining the service by using the first token without authorization, thereby ensuring network security.

With reference to the second aspect, in some implementations of the second aspect, that the first network function network element obtains the first token includes: The first network function network element sends a token request message to an authorization function network element, where the token request message includes an identifier of the service, an identifier of the first network function network element, and an identifier of the second network function network element or a network element type of the second network function network element; and the first network function network element receives the first token from the authorization function network element.

Based on this implementation, when verifying that the first network function network element is authorized, the authorization function network element generates and sends the first token to the first network function network element, so that the first network function network element can request the service from the second network function network element by using the first token, thereby improving user experience.

With reference to the second aspect, in some implementations of the second aspect, the token request message further includes fourth service domain information, and the fourth service domain information indicates the service area of the service requested by the first network function network element; or the fourth service domain information indicates a service area in which the first network function network element requests the authorization function network element to authorize the service.

Based on this implementation, the fourth service domain information is carried in the token request message, so that the authorization function network element can generate the first token in a targeted manner after verifying that the first network function network element is authorized. In this case, the first service domain information in the first token can reduce a subsequent potential risk caused by a malicious attack on the first network function network element.

With reference to the second aspect, in some implementations of the second aspect, the token request message further includes a CCA, the CCA includes an identifier of a third network function network element and third service domain information, and the third service domain information indicates a service area of a service requested by the third network function network element.

With reference to the second aspect, in some implementations of the second aspect, the service request message further includes the CCA.

It should be understood that this implementation is mainly applicable to a scenario in which the first network function network element serves as a third-party entity and requests the second network function network element to provide the service for the third network function network element.

Based on this implementation, the CCA carried in the service request message may be used by the second network function network element to perform identity verification on the third network function network element, so that a malicious NF service consumer can be prevented from obtaining the service by using the first token without authorization, thereby ensuring network security.

With reference to the second aspect, in some implementations of the second aspect, the first service domain information indicates a service area range allowed by a capability of obtaining the service by the first network function network element; or the first service domain information indicates a service area range in which an authorization function network element authorizes the first network function network element to obtain the service; or the first service domain information indicates an authorized service area range of the service authorized to the first network function network element.

With reference to the second aspect, in some implementations of the second aspect, the service area indicated by the second service domain information is included in the service area range indicated by the first service domain information.

For beneficial effects of the second aspect and some implementations of the second aspect, correspondingly refer to related descriptions of the first aspect. Details are not described herein again.

According to a third aspect, a communication method is provided. The method may be performed by an authorization function network element (for example, an NRF), or may be performed by a chip or a circuit used in the authorization function network element. This is not limited in this application. For ease of description, an example in which the method is performed by the authorization function network element is used for description below.

The method includes: The authorization function network element receives a token request message from a first network function network element, where the token request message includes an identifier of a service, an identifier of the first network function network element, and an identifier of a second network function network element or a type of a second network function network element; the authorization function network element generates a first token when determining that the first network function network element is authorized to obtain the service from the second network function network element, where the first token includes first service domain information, and the first service domain information indicates a service area range in which the first network function network element is capable of obtaining the service from the second network function network element; and the authorization function network element sends the first token to the first network function network element.

According to the solution provided in this application, when determining that the first network function network element is authorized to obtain the service from the second network function network element, the authorization function network element generates and sends the first token to the first network function network element, so that the second network function network element subsequently determines, based on the first token, whether to provide the service. This can prevent a malicious NF service consumer from obtaining the service by using the first token without authorization, thereby ensuring network security.

For example, the authorization function network element may perform security protection on the generated first token. The security protection herein may be integrity protection. For example, the authorization function network element generates a message authentication code (message authentication code, MAC) for the first token by using a shared key. The authorization function network element may send the MAC and the first token together to an NFc, and the MAC is used to verify whether information in the first token is tampered with. Alternatively, the authorization function network element signs claims by using a private key, and an NFp may verify, by using the signature, whether the claims are tampered with. It should be understood that security protection is performed on the first token, so that a malicious NF service consumer can be prevented from tampering with a parameter in the first token.

With reference to the third aspect, in some implementations of the third aspect, the token request message further includes fourth service domain information, and the fourth service domain information indicates the service area of the service requested by the first network function network element; or the fourth service domain information indicates a service area in which the first network function network element requests the authorization function network element to authorize the service.

With reference to the third aspect, in some implementations of the third aspect, the token request message further includes a CCA, the CCA includes an identifier of a third network function network element and third service domain information, and the third service domain information indicates a service area of a service requested by the third network function network element.

With reference to the third aspect, in some implementations of the third aspect, that the authorization function network element generates the first token includes: The authorization function network element determines whether the service area indicated by the fourth service domain information is included in a service area range indicated by the third service domain information carried in the CCA; and the authorization function network element generates the first token when determining that the service area indicated by the fourth service domain information carried in the token request message is included in the service area range indicated by the third service domain information carried in the CCA.

Based on this implementation, verification is added to check whether the service area indicated by the fourth service domain information belongs to the service area range indicated by the third service domain information carried in the CCA, to verify whether a third-party entity (for example, a data collection coordination function network element), as a transferor of the service request message, maliciously tampers with a request of the third network function network element. This can prevent a malicious NF service consumer from obtaining the service by using the first token without authorization, thereby further ensuring network communication security, and reducing a potential security risk.

With reference to the third aspect, in some implementations of the third aspect, the first service domain information indicates a service area range allowed by a capability of obtaining the service by the first network function network element; or the first service domain information indicates a service area range in which an authorization function network element authorizes the first network function network element to obtain the service; or the first service domain information indicates an authorized service area range of the service authorized to the first network function network element.

For beneficial effects of the third aspect and some implementations of the third aspect, correspondingly refer to related descriptions of the first aspect. Details are not described herein again.

According to a fourth aspect, a second network function network element is provided. The apparatus includes: a receiving unit, used by the second network function network element to receive a service request message from a first network function network element, where the service request message is used to request the second network function network element to provide a service for the first network function network element, the service request message includes a first token and second service domain information, the second service domain information indicates a service area of data requested by the first network function network element, the first token includes first service domain information, the first service domain information indicates a service area range in which the first network function network element is capable of obtaining the service from the second network function network element, and the second network function network element determines, based on the first token, whether to provide the service for the first network function network element; and a processing unit, configured to determine, based on the first token, whether to provide the service for the first network function network element.

The transceiver unit may perform receiving and sending in the first aspect, and the processing unit may perform processing other than receiving and sending in the first aspect.

According to a fifth aspect, a first network function network element is provided. The network element includes: a processing unit, configured to obtain a first token, where the first token includes first service domain information, and the first service domain information indicates a service area range in which the first network function network element is capable of obtaining a service from a second network function network element; and a transceiver unit, configured to send a service request message to the second network function network element, where the service request message is used to request the second network function network element to provide the service for the first network function network element, the service request message includes the first token and second service domain information, and the second service domain information indicates a service area of the service requested by the first network function network element. The transceiver unit is further configured to receive the service from the second network function network element.

The transceiver unit may perform receiving and sending in the second aspect, and the processing unit may perform processing other than receiving and sending in the second aspect.

According to a sixth aspect, an authorization function network element is provided. The network element includes: a transceiver unit, configured to receive a token request message from a first network function network element, where the token request message includes an identifier of a service, an identifier of the first network function network element, and an identifier of a second network function network element or a type of a second network function network element; and a processing unit, configured to generate a first token when determining that the first network function network element is authorized to obtain the service from the second network function network element, where the first token includes first service domain information, and the first service domain information indicates a service area range in which the first network function network element is capable of obtaining the service from the second network function network element. The transceiver unit is further configured to send the first token to the first network function network element.

The transceiver unit may perform receiving and sending in the third aspect, and the processing unit may perform processing other than receiving and sending in the third aspect.

According to a seventh aspect, a communication apparatus is provided, including a transceiver, a processor, and a memory. The processor is configured to control the transceiver to send and receive a signal. The memory is configured to store a computer program. The processor is configured to invoke the computer program from the memory and run the computer program, to cause the communication apparatus to perform the method in any one of the first aspect to the third aspect and any possible implementation of the first aspect to the third aspect.

Optionally, there are one or more processors, and there are one or more memories.

Optionally, the memory may be integrated with the processor, or the memory and the processor are separately disposed.

Optionally, the communication apparatus further includes a transmitter machine (transmitter) and a receiver machine (receiver).

According to an eighth aspect, a communication system is provided, including one or more of the foregoing first network function network element, second network function network element, and authorization function network element.

According to a ninth aspect, a computer-readable storage medium is provided. The computer-readable storage medium stores a computer program or code. When the computer program or code is run on a computer, the computer is caused to perform the method in any one of the first aspect to the third aspect and any possible implementation of the first aspect to the third aspect.

According to a tenth aspect, a chip is provided, including at least one processor. The at least one processor is coupled to a memory, the memory is configured to store a computer program, and the processor is configured to invoke the computer program from the memory and run the computer program, to cause a communication apparatus on which the chip system is installed to perform the method in any one of the first aspect to the third aspect and any possible implementation of the first aspect to the third aspect.

The chip may include an input circuit or interface for sending information or data and an output circuit or interface for receiving information or data.

According to an eleventh aspect, a computer program product is provided. The computer program product includes computer program code. When the computer program code is run on a communication apparatus, the communication apparatus is caused to perform the method in any one of the first aspect to the third aspect and any possible implementation of the first aspect to the third aspect.

### BRIEF DESCRIPTION OF DRAWINGS

FIG. 1 is a diagram of a network architecture 100 to which embodiments of this application are applicable;
FIG. 2 is a schematic flowchart of a token request method and a service request method 200 according to an embodiment of this application;
FIG. 3 is a schematic flowchart of a model sharing method 300 according to an embodiment of this application;
FIG. 4 is a schematic flowchart of another model sharing method 400 according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a schematic flowchart of a communication method 800 according to an embodiment of this application;
FIG. 9 is a diagram of a structure of a communication apparatus 1000 according to an embodiment of this application;
FIG. 10 is a diagram of a structure of another communication apparatus 2000 according to an embodiment of this application; and
FIG. 11 is a diagram of a structure of a chip system 3000 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network compliant with a requirement of the 3rd generation partnership project (3rd generation partnership project, 3GPP) standard, which is referred to as a 3GPP network for short. The 3GPP network usually includes but is not limited to a 5G network, a 4th generation (4th generation, 4G) network, and another future communication system, for example, a 6th generation (6th generation, 6G) network.

For ease of description, the 5G network is used as an example for description in embodiments of this application.

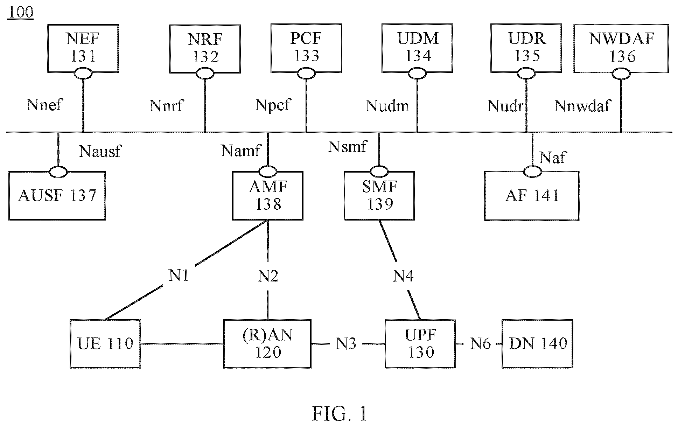

FIG. 1 is a diagram of a network architecture 100 to which embodiments of this application are applicable. As shown in FIG. 1, the network architecture may specifically include three parts: a terminal device part, a data network (data network, DN) part, and an operator network PLMN part. The following briefly describes a function of a network element of each part.

The terminal device part may include a terminal device 110, and the terminal device 110 may also be referred to as user equipment (user equipment, UE). The terminal device 110 in this application is a device having wireless sending and receiving functions, and may communicate with one or more core network (core network, CN) devices through an access network device (which may alternatively be referred to as an access device) in a radio access network (radio access network, RAN) 140. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, and include an indoor terminal device, an outdoor terminal device, a handheld terminal device, or an in-vehicle terminal device; or may be deployed on a water surface (for example, on a ship); or may be deployed in the air (for example, on an aircraft, a balloon, or a satellite). The terminal device 110 may be a cellular phone (cellular phone), an uncrewed aerial vehicle, an intelligent vehicle, a cordless phone, a session initiation protocol (session initiation protocol, SIP) phone, a smart phone (smart phone), a mobile phone (mobile phone), a wireless local loop (wireless local loop, WLL) station, a personal digital assistant (personal digital assistant, PDA), or the like. Alternatively, the terminal device 110 may be a handheld device with a wireless communication function, a computing device or another device connected to a wireless modem, a vehicle-mounted device, a wearable device, an uncrewed aerial vehicle device, a terminal in the internet of things or the internet of vehicles, a terminal in any form in a 5G network and a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device herein is a 3GPP terminal. A type, a category, or the like of the terminal device is not limited in embodiments of this application. For ease of description, an example in which UE represents the terminal device is used for description below in this application.

The operator network PLMN part may include but is not limited to a radio access network (RAN) 120 and a core network CN part.

The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120. An access network device (RAN device) in embodiments of this application is a device that provides a wireless communication function for the terminal device 110, and may also be referred to as a network device. The RAN device includes but is not limited to a next generation node base station (next generation node base station, gNB) in a 5G system, an evolved NodeB (evolved NodeB, eNB) in LTE, a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a pico base station device (pico), a mobile switching center, a network device in a future network, or the like. In systems using different radio access technologies, devices with functions of the access network device may have different names. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

The CN part may include but is not limited to the following network functions (network function, NF): a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (authentication server function, AUSF) 137, an access and mobility management function (access and mobility management function, AMF) 138, and a session management function (session management function, SMF) 139.

The data network DN 140 may also be referred to as a packet data network (packet data network, PDN), and is usually a network outside the operator network, for example, a third-party network. Certainly, in some implementations, the DN may alternatively be deployed by an operator, that is, the DN belongs to a part of the PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server to obtain an instruction of the control server, transmit collected sensor data to the control server according to the instruction, and the like. For another example, the data network DN 140 may be an internal office network of a company, a mobile phone or a computer of an employee of the company may be the terminal device 110, and the mobile phone or the computer of the employee may access information, data resources, and the like on the internal office network of the company. The terminal device 110 may establish a connection to an operator network through an interface (for example, N1) provided by the operator network, and use a service such as data and/or voice provided by the operator network. The terminal device 110 may further access a data network DN 140 through the operator network, and use an operator service deployed on the data network DN 140 and/or a service provided by a third party.

The following further briefly describes the NF functions included in the CN.
1. The UPF 130 is a gateway provided by an operator, and is a gateway for communication between the operator network and the data network DN 140. The UPF network function 130 includes user plane-related functions such as data packet routing and transmission, data packet detection, traffic usage reporting, quality of service (quality of service, QoS) handling, lawful interception, uplink data packet detection, and downlink data packet storage.
2. The NEF 131 is a control plane function provided by an operator, mainly enables a third party to use a service provided by a network, and supports the network in exposing a capability of the network, event and data analysis, providing security configuration information for a PLMN from an external application, conversion of information exchanged inside and outside the PLMN, and the like.
3. The NRF 132 is a control plane function provided by an operator, and may be configured to maintain real-time information of a network function and a service in a network, for example, support network service discovery, maintain services supported by NF configuration data (an NF profile) of NF instances, support service discovery of a communication proxy (service communication proxy, SCP), maintain SCP configuration data (an SCP profile) of SCP instances, send notifications about newly registered, deregistered, and updated NFs and SCPs, maintain health statuses of NFs and SCPs, and the like.
4. The PCF 133 is a control plane function provided by an operator, and supports a unified policy framework to govern network behavior and provide subscription information related to a policy rule and policy decision for another control function.
5. The UDM 134 is a control plane function provided by an operator, and is responsible for storing information such as a subscriber permanent identifier (subscriber permanent identifier, SUPI) of a subscriber in an operator network, a generic public subscription identifier (generic public subscription identifier, GPSI) of the subscriber, a credential (credential), and the like. The SUPI is first ciphered during transmission, and a ciphered SUPI is referred to as a subscription concealed identifier (subscription concealed identifier, SUCI). The information stored in the UDM network function 134 may be used for authentication and authorization for the terminal device 110 to access the operator network. The subscriber of the operator network may be specifically a user using a service provided by the operator network, for example, a user using a subscriber identity module (subscriber identity module, SIM) card of China Telecom or a user using a subscriber identity module card of China Mobile. The credential of the subscriber may be a long-term key stored in the subscriber identity module card, or a stored small file, for example, information related to encryption of the subscriber identity module card, and is used for authentication and/or authorization. It should be noted that for ease of description, information such as the permanent identifier, the credential, a security context, authentication data, and a token related to verification/authentication and authorization is not limited or distinguished in embodiments of this application.
6. The UDR 135 is a control plane function provided by an operator, and provides a function of storing and obtaining subscription data for a UDM, provides a function of storing and obtaining policy data for a PCF, stores and obtains NF group ID (group ID) information of a user, and the like.
7. The NWDAF 136 is a control plane function provided by an operator. A main function of the NWDAF 136 is to collect data from an NF, an external application function (application function, AF), an operation, administration and maintenance (operation, administration and maintenance, OAM) system, and the like, and provide the NF and the AF with NWDAF service registration, data exposure, data analysis, and the like.
8. The AUSF 137 is a control plane function provided by an operator, and is usually used for primary authentication, that is, authentication between the terminal device 110 (a subscriber) and the operator network. After receiving an authentication request initiated by the subscriber, the AUSF network function 137 may perform authentication and/or authorization on the subscriber by using authentication information and/or authorization information stored in the UDM network function 134, or generate authentication information and/or authorization information of the subscriber by using the UDM network function 134. The AUSF network function 137 may feed back the authentication information and/or the authorization information to the subscriber.
9. The AMF 138 is a control plane network function provided by an operator network, and is responsible for access control and mobility management when the terminal device 110 accesses the operator network, for example, including functions such as mobility status management, allocation of a temporary user identity, and user authentication and authorization.
10. The SMF 139 is a control plane network function provided by an operator network, and is responsible for managing a PDU session of the terminal device 110. The PDU session is a channel for transmitting a PDU, and the terminal device and the data network DN 140 need to transmit PDUs to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.

Optionally, the network architecture may further include a data collection coordination function (data collection coordination function, DCCF) network element and an analytics data repository function (analytics data repository function, ADRF) network element. The DCCF supports the following functions: determining a data source that can provide data for a received data request; determining whether data has been collected from a data source; indicating a message transfer framework to send data to a consumer or a notification endpoint; indicating a message transfer framework to format and process data sent through the message transfer framework; formatting and processing data; sending data to a consumer or a notification endpoint; and registering an NWDAF and an ADRF that have received data from a data source.

The ADRF provides data and analysis storage and retrieval services for a consumer. For example, the consumer sends, to the ADRF, Nadrf_DataManagement_StorageRequest including to-be-stored data or analysis. Alternatively, the consumer sends Nadrf_DataManagement_StorageSubscriptionRequest to the ADRF, to request the ADRF to subscribe to and receive data or analysis for storage. Then, the ADRF subscribes to the NWDAF or the DCCF to obtain data or analysis, and provides an ADRF notification address (or a notification association ID). The analysis or data is then provided as a notification using the DCCF, NWDAF, or MFAF service (Ndecf_DataManagement, Nnwdaf_DataManagement, or Nmfaf_3caDataManagement service).

For example, the consumer sends an Nadrf_DataManagement_RetrievalRequest request to the ADRF, to retrieve data or analysis in a specified data or analysis collection time window. The ADRF determines availability of data or analysis in a repository of the ADRF and sends the data or analysis to the consumer in a response, or obtains a description of the data or analysis; or the consumer sends an Nadrf_DataManagement_RetrievalSubscribe request to the ADRF to retrieve the data or analysis in the specified data or analysis collection time window. If the time window includes the future and the ADRF has subscribed to receive data or analysis, subsequent notifications received by the ADRF are sent by the ADRF to the notification endpoint. The ADRF determines availability of the data or analysis and sends a success/failure indication to the consumer in a response. The ADRF then uses Nadrf_DataManagement_RetrievalNotify to send one or more notifications to a notification address (or a notification association ID) specified by the consumer. The notification provides data or analysis, or provides the endpoint with instructions for obtaining data or analysis using Nadrf_DataManagement_RetrievalRequest.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

In FIG. 1, Nnef, Nnrf, Npcf, Nudm, Nudr, Nnwdaf, Nausf, Namf, Nsmf, N1, N2, N3, N4, and N6 are interface sequence numbers. For example, for meanings of the interface serial numbers, refer to meanings defined in the 3GPP standard protocol. The meanings of the interface serial numbers are not limited in this application. It should be noted that a name of an interface between the network functions in FIG. 1 is merely an example. In specific implementation, the name of the interface in the system architecture may alternatively be another name. This is not limited in this application. In addition, names of messages (or signaling) transmitted between the foregoing network elements are merely examples, and do not constitute any limitation on functions of the messages.

For ease of description, in embodiments of this application, a network function (such as the NEF 131, ..., and the SMF 139) is collectively/briefly referred to as an NF. In other words, the NF described below in embodiments of this application may be replaced with any network function. In addition, FIG. 1 describes only some network functions as an example, and the NF described below is not limited to the network functions shown in FIG. 1.

It should be understood that the foregoing network architecture applied to embodiments of this application is merely a network architecture described from a perspective of a service-based architecture, and a network architecture applicable to embodiments of this application is not limited thereto. Any network architecture that can implement functions of the foregoing network elements is applicable to embodiments of this application.

It should be further understood that the AMF, the SMF, the UPF, the NEF, the AUSF, the NRF, the PCF, and the UDM shown in FIG. 1 may be understood as network elements configured to implement different functions in a core network, for example, may be combined as required to form a network slice. These core network elements may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility of using other names in a 5G network and other networks in the future. For example, in a 6G network, some or all of the foregoing network elements may still use terms in 5G, or may use other names.

For ease of understanding the solutions provided in embodiments of this application, a communication mode between service-based network elements is first briefly described.

In a 5G service-based system architecture, two parties that communicate with each other based on a service-based interface are respectively referred to as a service consumer (service consumer) and a service provider (service producer). A party that requests a service is the service consumer, and a party that provides a service is the service producer. The service consumer may also be referred to as a consumer, a consuming network element, a user, a request side, a requester, a service consuming network element, or the like. The service provider may also be referred to as a providing network element, a service providing network element, a provider, a producer, a responder, or the like. This is not limited in this application.

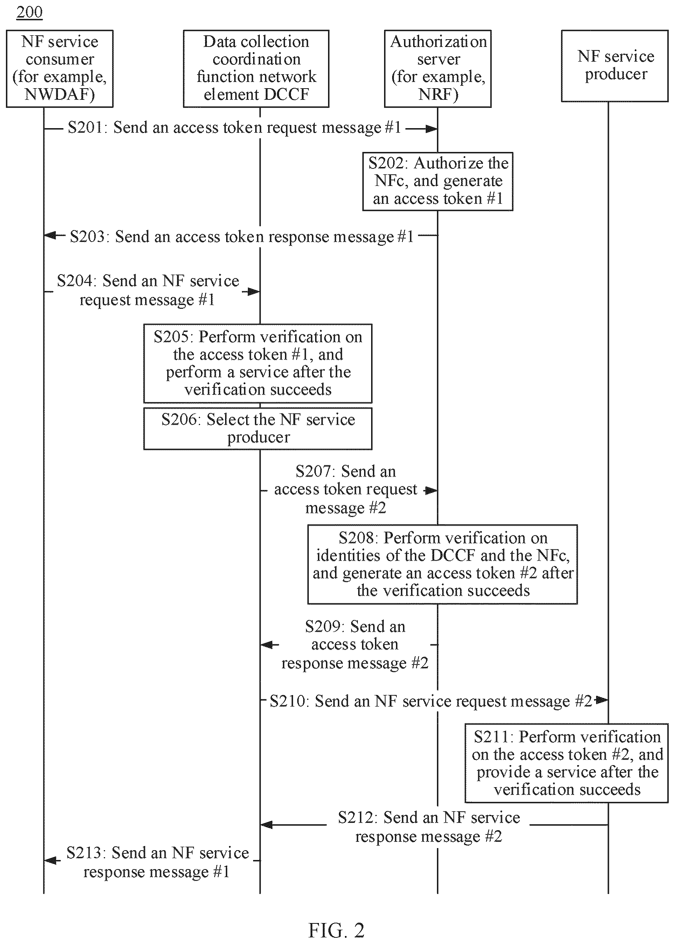

FIG. 2 is a schematic flowchart of a method 200 for obtaining an access token and an NF service according to an embodiment of this application. As shown in FIG. 2, an example in which an NFc obtains a data collection service from an NFp through a DCCF is used for description. The method includes the following plurality of steps. For a part that is not described in detail, refer to an existing protocol.

S201: The NF service consumer NFc (for example, an NWDAF) sends an access token request message #1 to an authorization function network element (for example, a network repository function network element NRF).

Correspondingly, the NRF receives the access token request message #1 from the NFc.

The access token request message #1 is used to request an authorization token for obtaining the data collection service from the DCCF.

In one case, the NFc may request an access token for accessing a service of an NFp of a specific network function type (NF type). In this case, the access token request message #1 includes an NF instance ID of the NFc (for example, NF Instance Id(s) of the NF service consumer), an expected NF service name (for example, expected NF service name(s), for example, data collection), an expected NF type (for example, DCCF), an NF type of the NFc, and an NF type of the NFp. Optionally, the access token request message #1 may further include an additional scope (that is, a requested resource and a requested operation for a resource), an expected network slice selection assistance information (single network slice selection assistance information, S-NSSAI) list or NSI ID list of an NFp instance, an expected NF set ID of an NFp instance, an S-NSSAI list of the NFc, and the like.

In another case, the NF service consumer may request an access token for accessing a specific NF service provider instance or a service of an NF service provider service instance. In this case, the access token request message #1 includes an NF instance ID(s) of a requested NFp, an expected service name, and an NF instance ID of the NFc. Optionally, the access token request message #1 further includes an additional scope (that is, a requested resource and a requested operation for a resource).

For example, the access token request message #1 may be an Nnrf_AccessToken_Get Request message.

Optionally, before the NFc sends the access token request message #1 to the NRF, the NFc and the NFp complete registration with the NRF. To ensure security of information exchange between the NF and the NRF, registration information exchange may comply with an OAuth 2.0 standard authorization framework formulated by the Internet Engineering Task Force (Internet Engineering Task Force, IETF). In OAuth 2.0, a client (client) corresponds to the NFc, a client ID corresponds to an NFc instance ID, and an authorization server (authorization server) corresponds to the NRF. For a specific NF registration procedure, refer to an existing protocol. Details are not described herein.

It should be noted that this implementation is applicable to a case in which the NFc and the NFp belong to a same operator, and is also applicable to a case in which the NFc and the NFp belong to different operators. This is not specifically limited in this application.

S202: The NRF authorizes the NFc, and generates an access token token #1 (for example, access_token_nwdaf).

In a service-based system architecture, when the NFc requests a service from the NFp, the NFp needs to perform authorization check on the service requested by the NFc, that is, check whether the NFc is authorized to use the requested service. The NFp provides the corresponding service for the NFc only after the authorization check succeeds. For authorization verification performed by the NFp on the service requested by the NFc, an authorization verification solution based on an access token may be used.

For example, that the NRF performs authorization check on the NFc may include: The NRF performs verification on an identity of the NFc, and when the identity verification succeeds, verifies whether the NFc has permission to access the requested service. The token #1 is generated when the NFc has the permission, so that a service obtained by the NFc by using the token #1 is an authorized service, and unauthorized use of the service is prevented.

That the NRF performs verification on the identity of the NFc may include: verifying whether a parameter (for example, the NF type (type) of the NFc) carried in a token #1 obtaining request matches a public key certificate or NF configuration information of the NFc. If the parameter matches the public key certificate or the NF configuration information, the identity verification succeeds, or if the parameter does not match the public key certificate or the NF configuration information, the verification fails. Specifically, for example, the NRF may obtain the corresponding public key certificate from the NFc. The public key certificate includes information about the NFc. The NRF compares the parameter (for example, the NF type of the NFc) in the token #1 obtaining request with the information included in the public key certificate. If the information is consistent, the identity verification succeeds; or if the information is inconsistent, the identity verification fails. Alternatively, for another example, the NRF obtains, based on an NF instance ID of the NFc in the token #1 obtaining request, NF configuration information (namely, the NF configuration information of the NFc) that is locally stored in the NRF network element and that is corresponding to the NF instance ID, and compares the parameter, for example, the NF type of the NFc, in the token #1 obtaining request with an NF type in the NF configuration information. If the NF types are consistent, the identity verification succeeds; or if the NF types are inconsistent, the identity verification fails.

That the NRF verifies whether the NFc has permission to access the requested service may include: The NRF determines, based on a service-related parameter (for example, an expected service name) carried in the token #1 obtaining request, the NF type of the NFc, and a local configuration, whether the NFc has permission to access the requested service. For example, the NFc is an NWDAF network element, the NFp is a DCCF network element, and the expected service name is data collection service. If the NRF determines, based on the local configuration, that the NWDAF network element has permission to obtain data from the DCCF network element, the authorization check succeeds. For another example, the NFc is an NWDAF network element, the NFp is an ADRF network element, and the expected service name is model obtaining. In this case, because the NRF determines, based on the local configuration, that the NWDAF network element cannot obtain a model from the ADRF network element, the authorization check fails. If the authorization check on the NFc succeeds, the NRF generates an access token including claims.

Further, if the authorization check on the NFc succeeds, that is, the NFc is authorized, the NRF generates the token #1 including the claims. The claims include an NF instance ID of an authorization network element, an NF instance ID of the NF service consumer, an NF type of the NF service provider, an expected service name, an expiration time (expires_in), and the like. Optionally, the claims may further include an additional scope (a resource that is allowed to be requested and a requested operation for a resource), an expected S-NSSAI list or NSI ID list of an NF service provider instance, an expected NF set ID of the NF service provider instance, and the like.

Further, the NRF may perform security protection on the generated token #1. The security protection herein may be integrity protection. For example, the NRF generates a message authentication code MAC for the token #1 by using a shared key, and the NRF may send the MAC and the token #1 together to the NFc. The MAC is used to verify whether information in the token #1 is tampered with. Alternatively, the NRF signs the claims by using a private key, and the NFp may verify, by using the signature, whether the claims are tampered with. For a specific method of protecting the access token by using a signature and a MAC value, refer to a definition in RFC 7515.

If the NFc is not authorized, the NRF cannot issue the token #1 to the NFc. It should be understood that integrity protection (Integrity protection) is to use a physical means or a cryptographic method to ensure that information is not tampered with or is not modified without authorization during and after generation, transmission, and storage.

Optionally, the claims may further include other parameters, for example, an allowed resource, network slice information, "additional scope" information (that is, an allowed resource and an allowed resource operation (service operation)), an expected NSSAI or NSI ID list of an NFp instance, and an expected NF set ID of the NFp instance.

It should be noted that a check granularity of the NRF in step S202 is a service level. Therefore, when the verification succeeds, the NFc may initiate, based on the token #1, a service request to any NFp that can provide the service.

S203: The NRF sends an access token response message #1 to the NFc.

Correspondingly, the NFc receives the access token response message #1 from the NRF.

The access token response message #1 is used to authorize the NFc to obtain the data collection service from the DCCF, that is, to receive, from the DCCF, data requested by the NFc. The access token response message #1 includes the token #1.

Optionally, the access token response message #1 may further include a validity period of the token #1, and the token #1 usually can be reused within the validity period.

For example, if all parameters in the access token request message #1 are verified, and the NFc is authorized to access the requested service, the NRF sends the generated token #1 to the NFc by using the access token response message #1 (for example, Nnrf_AccessToken_Get Response). Optionally, the access token response message #1 may further include other parameters, for example, an expiration time of the token #1 and a range in which the token #1 is allowed to be used for a request. If the authorization verification in S202 fails, the NRF sends an error response or a reject response to the NFc.

S204: The NFc sends an NF service request message #1 to the DCCF.

Correspondingly, the DCCF receives the NF service request message #1 from the NFc.

The NF service request message #1 is used to request to obtain data from the NFp through the DCCF. The NF service request message #1 includes the token #1 and a CCA (for example, CCA_NWDAF) generated by the NFc. CCA_NWDAF is used by the NFp to perform identity verification on the NFc in a subsequent step.

For example, the NF service request message #1 may be an NF Service Request message, and specifically, may be an Ndccf_DataManagement_Subscribe message.

S205: The DCCF performs verification on the token #1, and performs the service after the verification succeeds.

For example, the DCCF performs integrity verification on the token #1, for example, performs verification on a digital signature by using a public key of the NRF, to ensure that the token #1 is issued by the NRF; and checks a MAC value by using a shared key, to perform verification on integrity protection of the token #1, to ensure that the token #1 is not tampered with or is not modified without authorization. Further, after the verification on the integrity protection succeeds, verification is performed on the identity of the NFc by comparing CCA_NWDAF with the instance ID of the NFc carried in the token #1. Optionally, when authenticity and legality of the token #1 are ensured, the DCCF may further determine validity and the like of the token #1 by using the validity period of the token #1, and content verified by the DCCF specifically depends on parameters carried in the claims. Only after the foregoing verification succeeds, the DCCF performs the service requested by the NFc, that is, performs step S206. If the foregoing verification fails, the service request is rejected. Optionally, the NRF may return a response message indicating a verification error to the NFc.

S206: The DCCF determines the NFp.

Optionally, if information about the NFp (for example, the type of the NFp and the instance ID of the NFp) is carried in step S204, the DCCF may not autonomously select the NFp, but send a request to the NRF by using an NFp provided by the NFc, that is, step S207 is performed.

S207: The DCCF sends an access token request message #2 to the NRF.

Correspondingly, the NRF receives the access token request message #2 from the DCCF.

The access token request message #2 is used to request an authorization token for obtaining the data collection service from the NFp. The access token request message #2 includes the instance ID (for example, NWDAF) of the NFc, an NF instance ID of the DCCF, CCA_NWDAF, an expected NF service name (for example, data collection), and an expected NFp type (for example, data producer function network element data producer NF). It should be understood that the NF instance ID of the DCCF may be included in an information element (information element, IE) different from that of the NFc.

Optionally, the access token request message #2 further includes but is not limited to a type (for example, NWDAF) of the NFc, an expected NSSAI list or NSI ID list of an NFp instance, an expected NF set ID of the NFp instance, an S-NSSAI list of the NFc, and the like.

For example, the access token request message #2 may be an Nnrf_AccessToken_Get Request message.

S208: The NRF performs verification on identities of the DCCF and the NFc, and generates a token #2 (for example, access_token_dataproducer).

For example, the NRF checks whether the DCCF and the NFc are allowed to access a service provided by the determined NFp. For example, the NRF performs identity verification on the DCCF and NFc according to one of SBA methods. For example, the NRF performs verification on a parameter (such as an NF type) in the access token request message #2 to determine whether the parameter matches the public key certificate or an NF profile of the NF service consumer. In addition, the NRF further checks whether the NFc is authorized to access the requested service.

Optionally, in a standard version of 3GPP Release 16, the NRF uses CCA_NWDAF to perform identity verification on the NFc. In the standard version or an earlier version of 3GPP Release 16, the NRF verifies whether the NFc is authorized to accept the requested service, but does not verify whether the DCCF is authorized to accept the requested service.

If the verification in the foregoing verification procedure succeeds, the NRF generates the token #2. The token #2 includes claims, where the claims include additional claims of the NF instance ID of the NFc and an identifier of the DCCF, used to authorize the NFc and the DCCF to obtain the data collection service from the NFp.

Optionally, the claims may further include but are not limited to: an NF instance ID of the issuing NRF, the NF type of the NFp, an expected service name of the NFc, a validity period of the token #2, an allowed resource, network slice information, "additional scope" information (that is, an allowed resource and an allowed resource operation (service operation)), an expected NSSAI or NSI ID list of an NFp instance, an expected NF set ID of the NFp instance, and the like.

Optionally, in the standard version or an earlier version of 3GPP Release 16, the additional claim of the identifier of the DCCF may not be added to the token #2.

Further, the NRF may perform security protection on the generated token #2. The security protection herein may be integrity protection. For example, the NRF generates a message authentication code MAC for the token #2 by using a shared key, and the NRF may send the MAC and the token #2 together to the DCCF or the NFc. The MAC is used to verify whether information in the token #2 is tampered with. Alternatively, the NRF signs the claims by using a private key, and the NFp may verify, by using the signature, whether the claims are tampered with.

S209: The NRF sends an access token response message #2 to the DCCF.

Correspondingly, the DCCF receives the access token response message #2 from the NRF.

The access token response message #2 indicates that the NFc and the DCCF are authorized to obtain data collection from the NFp, and the access token response message #2 includes the token #2.

Optionally, the access token response message #2 may further include a validity period of the token #2, and the token #2 usually can be reused within the validity period.

For example, the access token response message #2 may be an Nnrf_AccessToken_Get Response message.

S210: The DCCF sends an NF service request message #2 to the NFp.

Correspondingly, the NFp receives the NF service request message #2 from the DCCF.

The NF service request message #2 is used to request the NFp to provide the data collection service, that is, the DCCF requests to obtain data from the NFp for the NFc. The NF service request message #2 includes the token #2, the NF instance ID of the DCCF, and CCA _NWDAF.

For example, the NF service request message #2 may be an NF Service Request message.

S211: The NFp performs verification on the token #2, and provides the service after the verification succeeds.

For example, the NFp performs verification on the NFc, the token #2, and the DCCF. For example, the NFp performs verification on the identity of the NFc by comparing CCA_NWDAF with the instance ID of the NFc carried in the token #2; performs verification on the identity of the DCCF by comparing the identifier of the DCCF in the claims included in the token #2 with the NF instance ID of the DCCF carried in the NF service request message #2; performs verification on a digital signature by using the public key of the NRF, to ensure that the token #2 is issued by the NRF; and checks a MAC value by using a shared key, to perform verification on integrity protection of the token #2, to ensure that the token #2 is not tampered with or is not modified without authorization. When the verification on the integrity protection of the token #2 succeeds, the NFp further needs to perform verification on the claims in the token #2. For example, whether the NF instance ID or the NF type of the NFc in the claims matches an ID or a type of the NFp is verified. If the claims include S-NSSAIs or NSI IDs, the NFp verifies whether a corresponding slice can be served. If the claims include an NF set ID of the NFp, the NFp verifies whether the NF set ID in the claims matches an NF set ID of the NFp. If the claims include a service name, the NFp verifies whether a requested service operation is matched. If the claims include information about an additional scope, the NFp verifies whether the additional scope matches the requested operation. The NFp compares the expiration time in the token #2 with a current time to verify whether the token expires. If the NF service request message #2 includes an NF set ID, the NFp verifies whether the NF set ID matches the NF set ID in the claims in the token #2, and so on.

Optionally, if the identifier of the DCCF is not included in the additional claim of the token #2, for example, the NRF uses the standard version or an earlier version of 3GPP Release 16, the NFp may locally authorize the DCCF and perform the service after authentication and authorization succeed. Optionally, the DCCF may include an additional CCA for identity verification.

S212: The NFp sends an NF service response message #2 to the DCCF.

Correspondingly, the DCCF receives the NF service response message #2 from the NFp.

The NF service response message #2 includes the data requested by the NFc.

For example, the NF service response message #2 may be an NF Service Response via notification message.

It should be understood that, based on that the token #2 is successfully verified in step S211, the NFp performs the service. On the contrary, the NFp refuses to provide the service.

S213: The DCCF sends an NF service response message #1 to the NFc.

Correspondingly, the NFc receives the NF service response message #1 from the DCCF.

The NF service response message #1 includes the data requested by the NFc.

For example, the NF service response message #1 may be an NF Service Response via notification message.

Optionally, if another NFc requests the data collected in step S212 from the DCCF in a later phase, steps S201 to S212 need to be performed. Then, when the NFp receives an NF service request message, the NFp needs to perform identity verification on the new NFc and perform verification on an access token carried in the NF service request message, and sends an NF service response message to the DCCF. If the NF service response message indicates that the access token is successfully verified, the DCCF may also send the data to the new NFc. If the NF service response message indicates that the access token fails to be verified, the DCCF rejects the NF service request of the new NFc.

It should be noted that the foregoing provided token obtaining and service request procedure is merely an example for description, and this application is not limited thereto. Other methods that can implement token obtaining and service request all fall within the protection scope of this application.

Based on this implementation, the NFc may receive the data from the NFp through the DCCF. Because an NF service may have an authorized service range, if the NFc is intruded, cross-service-area unauthorized access may occur on the NF service. In other words, the NFc can obtain data across areas without authorization, causing a network security problem.

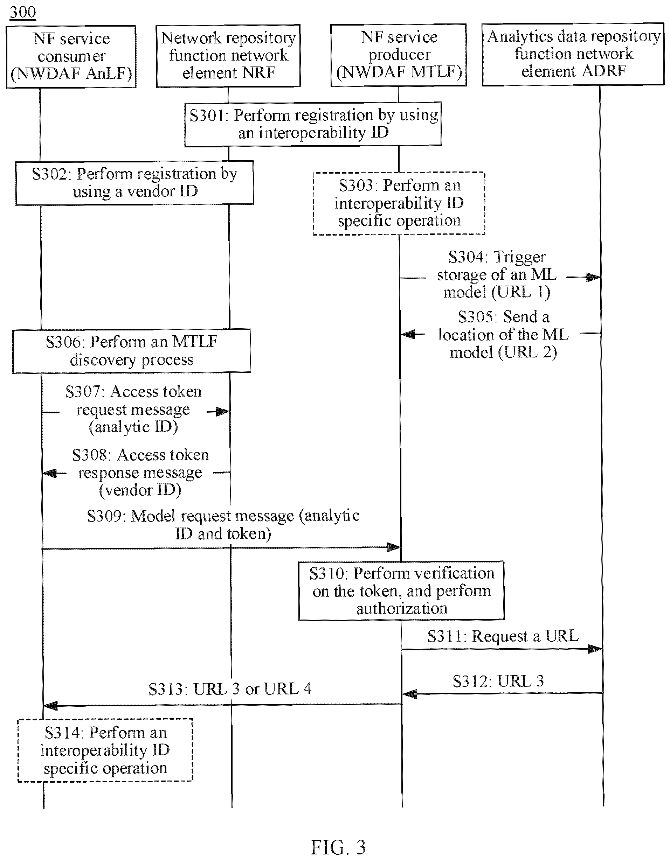

FIG. 3 is a schematic flowchart of a model sharing method 300 according to an embodiment of this application. To be specific, an NFc requests, from an analytics data repository function network element ADRF, to obtain a model trained by an NFp. As shown in FIG. 3, the method includes the following plurality of steps. For a part that is not described in detail, refer to an existing protocol.

S301: The NF service producer NFp (for example, an NWDAF MTLE) performs registration by using an interoperability ID.

S302: The NF service consumer NFc (for example, an NWDAF AnLF) performs registration by using a vendor ID.

It should be understood that the interoperability ID is a list of vendor IDs (vendor ID) that allow each analytic ID (analytic ID) to access an ML model.

For example, in step S301, an NWDAF including an MTLE registers an NFp profile (Profile) thereof with an NRF, where the profile is supported by an NWDAF including the MTLE and an interoperability ID thereof. Similarly, in step S302, an NWDAF including an AnLF registers an NFc profile (Profile) thereof with the NRF, where the profile is supported by an NWDAF including the AnLF and a vendor ID thereof.

S303: Optionally, the NFp performs an interoperability ID specific operation.

For example, the NFp performs operations such as encryption and integrity protection for security of the ML model. An encryption manner of the ML model is not within a scope of 3GPP.

S304: The NFp triggers storage of the ML model.

For example, the NFp sends a request message to the ADRF, to request to store the ML model. The request message includes a storage address of the ML model in the NFp, for example, a URL 1. The request message further includes a model association identifier (for example, a model correction ID). Correspondingly, the ADRF obtains the protected ML model based on the address URL 1 of the ML model in the NFp, and stores the ML model.

S305: The ADRF sends a storage location of the ML model to the NFp.

For example, the storage location of the ML model in the ADRF is a URL 2, used by the NFp to subsequently update or access the ML model.

S306: Perform an MTLF discovery process between the NFc and the NRF.

Based on the foregoing steps, the NRF records a status of an ML model trained by the NFp, for example, an analytic ID (analytic ID) of each ML model. Because the NFc registers with the NRF by using the vendor ID, the NRF may notify the NFc of an association relationship between the ML model and the analytic ID and the NFc and the vendor ID, so that the NFc requests the ML model from the ADRF in a targeted manner.

S307: The NFc sends an access token request message to the NRF.

Correspondingly, the NRF receives the access token request message from the NFc.

The access token request message includes the analytic ID.

For example, the access token request message may be an Nnrf_AccessToken_Get Request message.

S308: The NRF sends an access token response message to the NFc.

Correspondingly, the NFc receives the access token response message from the NRF.

The access token response message includes a token, and the token includes a specified vendor ID.

For example, the access token response message may be an Nnrf_AccessToken _Get Response message.

Specifically, for specific implementations of steps S307 and S308, refer to steps S201 to S203 in the method 200, including an implementation in which the NRF authorizes the NFc. For brevity, details are not described herein.

S309: The NFc sends a model request message to the NFp.

Correspondingly, the NFp receives the model request message from the NFc.

The model request message includes the analytic ID and the token, and the token carries the specified vendor ID.

S310: The NFp performs verification on the token, and performs authorization.

For example, the NFp needs to verify whether the specified vendor ID carried in the token corresponds to the analytic ID carried in the model request message. It should be understood that, when verifying that the token is valid, the NFp may perform further authorization by using the specified vendor ID in the token. If the ML model requested by the NFc is stored in the ADRF, steps S311 to S313 continue to be performed.

S311: The NFp sends a URL request message to the ADRF.

Correspondingly, the ADRF receives the URL request message from the NFp.

The URL request message includes a model association identifier (for example, a model correction ID) or the URL 2.

For example, after receiving the URL request of the NFp, the ADRF checks whether an owner of the ML model stored in step S304 is the NFp. If the check succeeds, the ADRF provides a new storage address, for example, a URL 3, for the stored ML model, and continues to perform step S312. The URL 3 may be a URL that is used only once.

S312: The ADRF sends the URL 3 to the NFp.

Correspondingly, the NFp receives the URL 3 from the ADRF.

S313: The NFp sends the URL 3 to the NFc.

Correspondingly, the NFc receives the URL 3 from the NFp.

It should be understood that a prerequisite for performing the foregoing steps S311 to S313 is that the ML model requested by the NFc is stored in the ADRF. Optionally, if the ML model requested by the NFc is stored in the NFp, after step 310, the NFp provides a new storage address, for example, a URL 4, for the stored ML model, and returns the URL 4 to the NFc. In other words, steps S311 to S313 do not need to be performed. The URL 4 may be a URL that is used only once. Therefore, the NFc may obtain the protected ML model from the NFp or the ADRF based on the URL 4 or the URL 3.

S314: Optionally, the NFc performs an interoperability ID specific operation.

For example, the NFc may perform operations such as decryption and integrity check in consideration of the interoperability ID on the protected ML model.

Based on this implementation, the ML model has a service area limitation. Because an access token does not include service domain information, the NFp does not know a service area of the NFc, and may authorize the NFc an ML model that exceeds a service range of the NFc. In this case, model leakage is caused, and network security cannot be ensured.

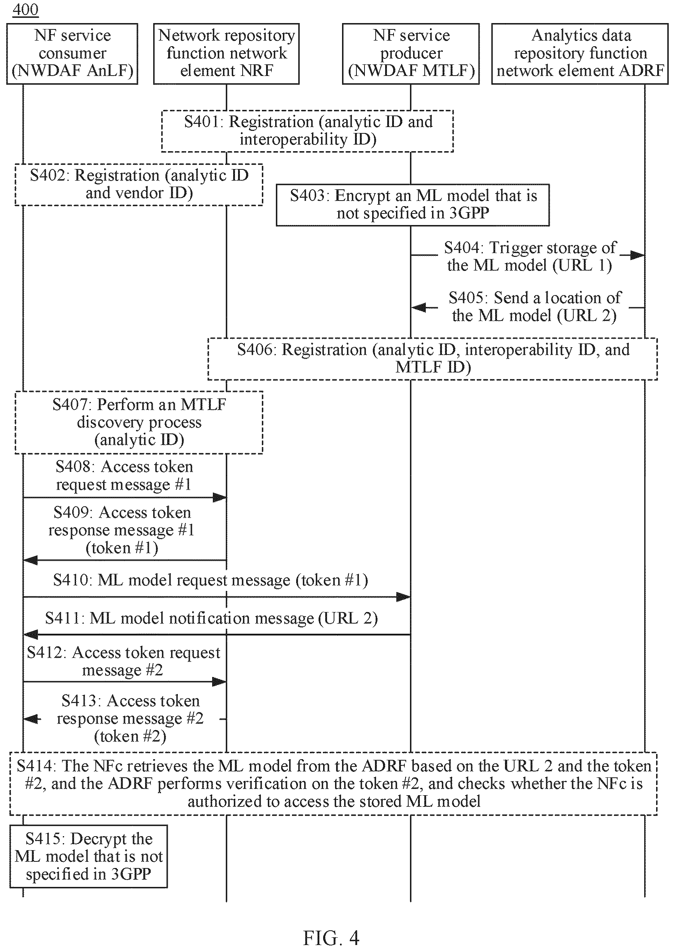

FIG. 4 is a schematic flowchart of another model sharing method 400 according to an embodiment of this application. As shown in FIG. 4, the method includes the following plurality of steps. For a part that is not described in detail, refer to an existing protocol.

S401: Optionally, an NF service producer NFp (for example, an NWDAF MTLE) performs registration by using an analytic ID and an interoperability ID.

S402: Optionally, an NF service consumer NFc (for example, an NWDAF AnLF) performs registration by using an analytic ID and a vendor ID.

For example, in step S401, an NWDAF including an MTLE registers an NFp profile thereof with an NRF, where the profile is supported by an NWDAF including the MTLE and an analytic ID and an interoperability ID thereof. Similarly, in step S402, an NWDAF including an AnLF registers an NFc profile (Profile) thereof with the NRF, where the profile is supported by an NWDAF including the AnLF and an analytic ID and a vendor ID thereof.

S403: The NFp encrypts an ML model that is not specified in 3GPP.

A specific encryption method is not limited in embodiments of this application.

S404: The NFp triggers storage of the ML model.

S405: An ADRF sends a storage location of the ML model to the NFp.

S406: Optionally, the ADRF performs registration by using an analytic ID, an interoperability ID, and an MTLF ID.

For example, the ADRF registers an NF profile thereof with the NRF, and the profile includes the analytic ID, the interoperability ID, and the MTLF ID.

S407: Optionally, perform an MTLF discovery process between the NFc and the NRF.

For example, the NFc (for example, the NWDAF including the AnLF) performs an Nnrf_NF discovery request operation by using a requested analytic ID, to select an appropriate NFp (for example, the NWDAF including the MTLF).

For specific implementations of steps S403 to S407, refer to the related descriptions of steps S303 to S306 in the method 300. For brevity, details are not described herein again.

S408: The NFc sends an access token request message #1 to the NRF.

Correspondingly, the NRF receives the access token request message #1 from the NFc.

The access token request message #1 is used to request to obtain an access token, to retrieve the ML model. The access token request message #1 includes a target NF (for example, the NFp (the NWDAF including the MTLF)), an NF type and/or an NFc ID of the NFc (for example, the NWDAF including the AnLF), and the analytic ID and the vendor ID of the NFc.

For example, the access token request message #1 may be an Nnrf_AccessToken_Get Request message.

S409: The NRF sends an access token response message #1 to the NFc.

Correspondingly, the NFc receives the access token response message #1 from the NRF.

The access token response message #1 includes a token #1.

For example, the access token response message #1 may be an Nnrf_AccessToken_Get Response message.

For specific implementations of steps S408 and S409, refer to steps S307 and S308 in the method 300. For example, before performing step S409, the NRF needs to check whether the NWDAF including the AnLF is authorized to access a service provided by the NWDAF including the MTLF, and verify whether the NWDAF including the vendor ID of the AnLF is included in the NWDAF including the analytic ID and the interoperability ID of the MTLF. Only when the verification succeeds, the NRF generates the token #1 based on MTLF NF information included in the NWADF, and then performs step S409. For brevity, details are not described herein.

S410: The NFc sends an ML model request message #1 to the NFp.

Correspondingly, the NFp receives the ML model request message #1 from the NFc.

The ML model request message #1 is used to retrieve an ML model associated with an analytic ID, and the ML model request message #1 includes the token #1, the analytic ID, and a vendor ID.

For example, the ML model request message #1 may be an Nnwdaf_ML modelProvision_Subscribe message.

S411: The NFp sends an ML model notification message #1 to the NFc.

Correspondingly, the NFc receives the ML model notification message #1 from the NFp.

The ML model notification message #1 includes the URL 2, that is, the storage address of the ML model in the ADRF.

For example, the ML model notification message #1 may be an Nnwdaf_ML modelProvision _Notify message.

It should be noted that, before performing step S411, the NFp needs to perform verification on the token #1, and determine the ML model corresponding to the analytic ID. For a specific manner of performing verification on the token #1, refer to the foregoing related descriptions. For brevity, details are not described herein again. Further, if the ML model determined by the NFp is stored in the ADRF, the foregoing step S411 is performed, that is, it indicates that a storage address of the ML model requested by the NFc is the URL 2 in the ADRF.

S412: The NFc sends an access token request message #2 to the NRF.

Correspondingly, the NRF receives the access token request message #2 from the NFc.

The access token request message #2 is used to request to obtain an authorization token, to retrieve the ML model stored in the ADRF. The access token request message #2 includes a target NF (for example, the ADRF), the NF type and/or the NFc ID of the NFc (for example, the NWDAF including the AnLF), the vendor ID of the NFc, the analytic ID, and an ID of the NFp (for example, the NWDAF including the MTLF).

For example, the access token request message #2 may be an Nnrf_AccessToken_Get Request message.

S413: The NRF sends an access token response message #2 to the NFc.

Correspondingly, the NFc receives the access token response message #2 from the NRF.

The access token response message #2 includes a token #2.

For example, the access token response message #2 may be an Nnrf_AccessToken_Get Response message.

For specific implementations of steps S412 and S413, refer to steps S408 and S409. For example, before performing step S413, the NRF needs to verify whether the NWDAF including the vendor ID of the AnLF is included in an analytic ID and an interoperability ID of a model producer NF, that is, the NF profile of the ADRF includes the NWDAF including the MTLF. Only when the verification succeeds, the NRF generates the token #2 based on information provided in the NF profile of the ADRF, and then performs step S413. For brevity, details are not described herein.

S414: Optionally, the NFc retrieves the ML model from the storage address URL 2 in the ADRF based on the token #2, and the ADRF performs verification on the token #2, and checks whether the NFc is authorized to access the stored ML model. The ADRF authorizes the NFc to retrieve the ML model stored in the ADRF only when the verification succeeds.

S415: The NFc decrypts the ML model that is not specified in 3GPP.

For example, the NFc may perform operations such as decryption and integrity check in consideration of the vendor ID associated with the protected ML model.

Based on this implementation, an access token obtained by the NFc does not include service domain information. Therefore, the NFc may access all ML models associated with the analytic ID of the NFp, and a usage scope limitation of the ML model may exceed a service area of the NFc. In this case, model leakage is caused, and network security cannot be ensured.

In conclusion, the current OAuth authentication mechanism does not include check of service area information, and cannot meet a requirement of a service at a finer granularity, for example, a service area limitation. If an NF service has an area limitation, but an access token obtained by the NFc does not include service domain information, a service provided by the NFp when token verification succeeds may be accessed without authorization, and network security cannot be ensured.

In view of this, this application provides a communication method and apparatus. Service domain information is added to an access token, to provide an authentication mechanism at a finer granularity, so that a problem that an NFc accesses a service across areas without authorization can be resolved, network communication security can be ensured, and user experience can be improved.

For ease of understanding embodiments of this application, the following points are described.

First, in this application, unless otherwise stated or there is a logic conflict, terms and/or descriptions between different embodiments are consistent and may be mutually referenced, and technical features in different embodiments may be combined into a new embodiment based on an internal logical relationship thereof.

Second, in this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" usually indicates an "or" relationship between associated objects. "At least one of the following items (pieces)" or a similar expression thereof means any combination of these items, including a single item (piece) or any combination of a plurality of items (pieces). For example, at least one of a, b, and c may indicate a, b, c, a and b, a and c, b and c, or a, b, and c. Each of a, b, and c may be singular or plural.

Third, in this application, "first", "second", and various numerical numbers (for example, #1 and #2) are merely used for distinguishing for ease of description, but are not intended to limit the scope of embodiments of this application, for example, distinguishing different messages or the like, rather than describing a particular order or sequence. It should be understood that objects described in such a way are interchangeable in an appropriate circumstance, so that a solution other than embodiments of this application can be described.

It should be noted that, in the following, meanings represented by the information #1, the resource indication information #1, and the resource request information #1 are different from each other. It should be understood that names of information are merely examples for description. This is not limited in this application, and should not constitute any limitation on the technical solutions of this application.

Fourth, in this application, descriptions such as "when...", "in a case of...", and "if" all mean that a device performs corresponding processing in an objective case, and do not limit time, and the device is not required to perform a determining action during implementation. This does not mean that there is another limitation.

Fifth, in this application, the terms "include", "have", and any variants thereof are intended to cover non-exclusive inclusion. For example, a process, method, system, product, or device including a series of steps or units is not necessarily limited to those clearly listed steps or units, but may include other steps or units that are not clearly listed or are inherent to the process, method, product, or device.

Sixth, in this application, "indicate" may include "directly indicate" and "indirectly indicate". When a piece of indication information is described as indicating A, the indication information may directly indicate A or indirectly indicate A, but it does not mean that the indication information necessarily carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periods and/or sending occasions of the sub-information may be the same or may be different. A specific sending method is not limited in this application.

The "indication information" in embodiments of this application may be an explicit indication, that is, directly indicated by signaling, or obtained with reference to another rule or another parameter or through derivation based on a parameter indicated by signaling; or may be an implicit indication, that is, obtained according to a rule or a relationship, or based on another parameter, or through derivation. This is not specifically limited in this application.

Seventh, in this application, the "protocol" may be a standard protocol in the communication field, for example, may include a 5G protocol, an NR protocol, and a related protocol applied to a future communication system. This is not limited in this application. "Predefined" may include being defined in advance, for example, being defined in a protocol. "Preconfigured" may be implemented by pre-storing corresponding code or a corresponding table in a device, or may be implemented in another manner that may indicate related information. A specific implementation thereof is not limited in this application.

Eighth, in this application, "storage" may mean storage in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in this application.

Ninth, in this application, "communication" may also be described as "data transmission", "information transmission", "data processing", or the like. "Transmission" includes "sending" and "receiving".

The following describes in detail the communication method provided in embodiments of this application with reference to the accompanying drawings. For example, the communication method may be applied to the communication system shown in FIG. 1.

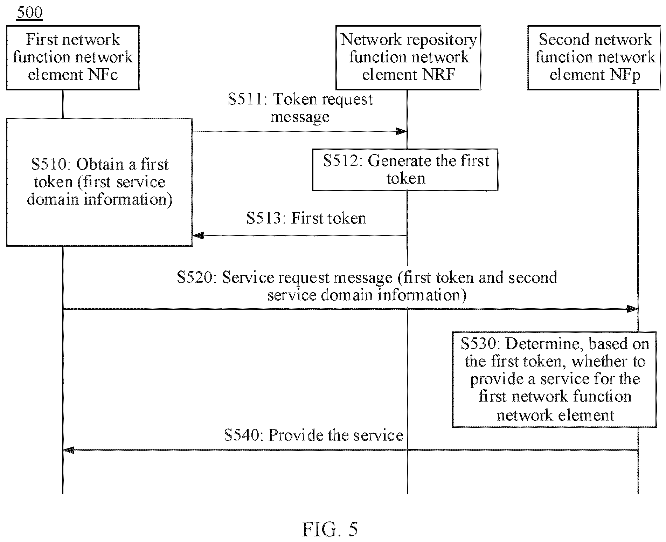

FIG. 5 is a schematic flowchart of a communication method 500 according to an embodiment of this application. The method 500 may be applied to the network architecture shown in FIG. 1. As shown in FIG. 5, the method includes the following plurality of steps.

S510: A first network function network element obtains a first token.

The first token includes first service domain information, and the first service domain information indicates a service area range in which the first network function network element can obtain a service from a second network function network element.

For example, the first network function network element may be an NFc network element, and the second network function network element may be an NFp network element. In other words, the second network function network element may be a service providing network element, and the first network function network element may be a service requesting network element. The first network function network element may request one or more services, and the second network function network element may provide one or more services. This is not limited in this application. Optionally, an identifier of the foregoing network function network element may be an NF ID (identity (Identity) or identifier (Identifier)) or an NF instance (Instance) ID.

Optionally, the service may be a data collection service or a model obtaining service, or may be another service, for example, a registration service or an SM policy control service. For example, if an NF service consuming network element is an NWDAF network element, and an NF service providing network element is a DCCF network element, the NWDAF network element requests to obtain the data collection service from the DCCF network element. For another example, if an NF service consuming network element is an NWDAF network element, and an NF service providing network element is an ADRF network element, the NWDAF network element requests to obtain the model obtaining service from the ARDF network element. For another example, if an NF service consuming network element is an SMF network element, and an NF service providing network element is a PCF network element, the SMF network element requests the SM policy control service from the PCF network element.

A service area range for obtaining a service may be understood as an area range for obtaining a service corresponding resource of the service. In a resource obtaining service, a service area range of the service may be understood as an area range for obtaining a service corresponding resource of the service. For example, when the resource is data, a model, a protocol data unit, or the like, the service area range of the service may be an area range for obtaining the corresponding data, an area range for obtaining the model, an area range for obtaining the protocol data unit, or the like. In other words, the first network function network element can obtain data or a model in the service area range, or the first network function network element has permission to request the second network function network element to provide data or a model in the service area range.

It should be understood that the first service domain information indicates a service area range allowed by a service obtaining capability of the first network function network element; or the first service domain information indicates a service area range in which an authorization function network element authorizes the first network function network element to obtain a service. For example, if service area ranges allowed by a data obtaining capability of the first network function network element are areas 1, 2, and 3, the service area range indicated by the first service domain information may be one or more of the areas 1, 2, and 3.

In other words, the first service domain information may be used to limit a service area range in which the first network function network element can request a service. In this embodiment of this application, the service domain information is mainly for a service (for example, the data collection service or the model obtaining service) in an authorized service area range. For example, an NWDAF has permission to request a service (data or a model) in a service domain #1 from the NFp, but does not have permission to request a service (data or a model) in a service domain #2 other than the service domain #1 from the NFp.

In this embodiment of this application, the first service domain information may be classified in a plurality of dimensions based on different standards. For example, classification is performed based on a geographical location or a network logical area location, or classification is performed by using a combination of a geographical location and a network logical area. Optionally, a name of the first service domain information may be serving area, area of interest, service area, servingScope, tracking area identity (tracking area identity, TAI), NF domain (domain) name, fully qualified domain name (fully qualified domain name, FQDN) type, or the like. It should be understood that the foregoing names are merely examples provided for ease of understanding of the solution, and the first service domain information may alternatively have another name. This is not specifically limited in this application.

For example, from a perspective of classification based on a geographical location, the first service domain information may be understood as a specified location area in a 3GPP system. The area of interest is represented by a tracking area list, a cell list, or a RAN node identifier list. In a case of LADN, an event user (for example, an SMF) provides an LADN DNN, to refer to an LADN service area as an area of interest. In a case of PRA, an event user (for example, an SMF or a PCF) may provide an identifier of an area of interest, to refer to a predefined area as an area of interest. The servingScope may indicate a geographical area, for example, may be used to discover and select NFs in a central data center, where the NFs are expected to provide a service for a user located in a specific area; or may be used to reduce TAI configuration in NF instances. From a perspective of classification based on a logical location, the first service domain information may be understood as: TAIs (or servingScope, that is, a service area of an NFc instance), an NF domain name or an FQDN type, an analytic ID supported by an NWDAF, service area information of the NWDAF (that is, a list of TAIs for which the NWDAF can provide a trained ML model and/or data), an analysis delay supported by each analytic ID, an NF type of an NF data source, an NF set ID of the NF data source, an analysis aggregation function, an analysis metadata preconfiguration function, S-NSSAI and a service area of a trained ML model for each analytic ID of the ML model, or the like.

For example, for the data collection service, the first service domain information indicates that the first network function network element can request, in an authorized service area range, the second network function network element to provide data. For the model obtaining service, the first service domain information indicates that the first network function network element can request, in an authorized service area range, the second network function network element to provide a model.

In an example, a capability of the first network function network element can support collection of data in service areas 1, 2, and 3. If a token request message sent in step S511 does not carry second service domain information, the authorization function network element determines, based on a locally stored NF profile of the first network function network element, that the first network function network element can collect the data in the service areas 1, 2, and 3. In this case, the first service domain information carried in the generated first token can authorize the service areas 1, 2, and 3.

In another example, a capability of the first network function network element can support collection of data in service areas 1, 2, and 3. If a token request message sent in step S511 carries second service domain information, and the second service domain information indicates the service areas 1 and 2, the authorization function network element performs verification on an identity of the first network function network element, and determines, based on a locally stored NF profile of the first network function network element, that the first service domain information carried in the generated first token can authorize the service areas 1 and 2. Optionally, the first service domain information herein may alternatively authorize the service areas 1, 2, and 3. This is not limited in this application.

Optionally, an implementation in which the first network function network element obtains the first token includes the following steps S511 to S513.

S511: The first network function network element sends the token request message to the authorization function network element.

Correspondingly, the authorization function network element receives the token request message from the first network function network element.

The token request message includes an expected service name or identifier (for example, expected NF service name(s)) of the first network function network element, an identifier of the first network function network element, an identifier of the second network function network element, or a type of the second network function network element. A service expected by the first network function network element may be the data collection service or the model obtaining service.

For example, the token request message may be an Nnrf_AccessToken _GetRequest message.

Optionally, the token request message further includes fourth service domain information, and the fourth service domain information indicates a service area of the service requested by the first network function network element.

For example, the fourth service domain information may be an area range of a resource corresponding to data requested by the first network function network element. For example, if service area ranges allowed by a data obtaining capability of the first network function network element are areas 1, 2, and 3, a service area range indicated by the fourth service domain information may be one or more of the areas 1, 2, and 3. Optionally, the service area range indicated by the fourth service domain information may alternatively include an area 4, that is, data in an area beyond a capability range of the first network function network element is requested. In this implementation, the authorization function network element may refuse to generate the first token.

In the technical solution of this application, the area range of the resource corresponding to the data obtained by the first network function network element is finally subject to the service area range indicated by the first service domain information in the token generated by the authorization function network element.

Optionally, the token request message further includes a CCA, the CCA includes an identifier (for example, NWDAF) of a third network function network element and third service domain information, and the third service domain information indicates a service area of a service requested by the third network function network element. It should be understood that this implementation is mainly applicable to a scenario in which the first network function network element serves as a third-party entity and requests the second network function network element to provide the service for the third network function network element. The CCA is used by the second network function network element to subsequently perform identity verification on the third network function network element, and is used by the second network function network element to verify whether a service area indicated by the second service domain information and requested by the first network function network element is included in a service area range indicated by the third service domain information carried in the CCA, to prevent the first network function network element from maliciously tampering with a service area range requested by the third network function network element, and improve network communication security. For example, the first network function network element is a DCCF, the third network function network element is an NWDAF, and the second network function network element is a data producing network element, and is configured to request the data collection service.

Optionally, when the first network function network element is an NFc (for example, a DCCF), and the second network function network element is an NFp (for example, a data producer), a service area indicated by fourth service domain information carried in a token request message sent by the DCCF to an NRF is included in the service area indicated by the third service domain information. It should be understood that, in this implementation, the DCCF may select one or more NFps. This is not limited in this application. For example, the fourth service domain information indicates areas 1 and 2. If the DCCF selects one NFp 1, the DCCF sends a token request message #1 to the NRF. After verifying that the DCCF and the NWDAF are authorized, the NRF provides a token #A for the DCCF. Subsequently, the DCCF may request, by using the token #A, to obtain data in the areas 1 and 2 from the NFp 1. Alternatively, if the DCCF selects two or more NFps (for example, an NFp 2 and an NFp 3), the DCCF sends a token request message #2 to the NRF. After verifying that the DCCF and the NWDAF are authorized, the NRF provides a token #B for the DCCF. Subsequently, the DCCF may request, by using the token #B, to obtain data in the area 1 from the NFp 2. In addition, the DCCF sends a token request message #3 to the NRF. After verifying that the DCCF and the NWDAF are authorized, the NRF provides a token #C for the DCCF. Subsequently, the DCCF may request, by using the token #C, to obtain data in the area 2 from the NFp 3.

In this embodiment of this application, the service area indicated by the third service domain information should be included in the service area range indicated by the first service domain information. For example, if service area ranges allowed by a data obtaining capability of the first network function network element are areas 1, 2, and 3, a service area range indicated by the third service domain information may be one or more of the areas 1, 2, and 3.

In this embodiment of this application, for another service requested by the NF service consumer, when an access token carrying the first service domain information is obtained from the authorization function network element, the NF service consumer may request a service within an authorized service area range from the NF service producer. This is a scenario in which the NF service consumer directly communicates with the NF service consumer. Alternatively, the NF service consumer may request, from the NF service producer by using a third-party entity, to obtain a service within an authorized service area range. When the third-party entity sends a service request to the NF service producer, a CCA of the NF service consumer (including an identifier of the NF service consumer and service area information requested by the NF service consumer) may be carried, so that the NF service producer performs identity verification on the NF service consumer, and verifies whether service domain information carried in the CCA includes service domain information sent by the third-party entity, to prevent the third-party entity from maliciously tampering with a service area range of a service (for example, data or a model) requested by the NF service consumer, avoid unauthorized access, and ensure network communication security.

S512: The authorization function network element generates the first token.

In an implementation, when determining that the first network function network element is authorized to obtain the service, the authorization function network element generates the first token.

For a specific implementation of generating the first token, refer to related descriptions of step S202 in the method 200. For brevity, details are not described herein again. A difference lies in that the first token generated by the authorization function network element in step S512 carries the first service domain information.

In another implementation, the token request message further includes the CCA, and the CCA includes the identifier of the third network function network element (for example, the NWDAF) and the third service domain information. In this case, the authorization function network element performs verification on identities of the first network function network element and the third network function network element, and determines whether the service area indicated by the fourth service domain information carried in the token request message is included in the service area range indicated by the third service domain information carried in the CCA. When determining that the service area indicated by the fourth service domain information belongs to the service area range indicated by the third service domain information carried in the CCA, the authorization function network element generates the first token, to ensure that the service area range of the service requested by the third network function network element is not maliciously tampered with or expanded by the first network function network element, thereby ensuring network security.

S513: The authorization function network element sends the first token to the first network function network element.

Correspondingly, the first network function network element receives the first token from the authorization function network element.

For example, the authorization function network element sends a token response message to the first network function network element, the token response message may be an Nnrf_AccessToken _GetResponse message, and the token response message includes the first token.

Based on the foregoing implementation steps, the first network function network element may obtain the first token, and when determining that the service needs to be provided by the second network function network element, generate a service request message, and perform the following step S520.

S520: The first network function network element sends the service request message to the second network function network element.

Correspondingly, the second network function network element receives the service request message from the first network function network element.

The service request message is used to request the second network function network element to provide the service for the first network function network element, the service request message includes the first token and the second service domain information, and the second service domain information indicates the service area of the service requested by the first network function network element.

For example, the service request message may be an NF Service request message.

In an example, the service request message further includes a CCA, and the CCA includes the identifier of the third network function network element and the third service domain information. For example, when the first network function network element is a data collection coordination function network element, the service request message is used by the data collection coordination function network element to request the data collection service from the second network function network element.

Optionally, before the first network function network element (for example, the DCCF) sends the service request message to the second network function network element (for example, the NFp), the first network function network element receives a service request message from the third network function network element (for example, the NWDAF), where the service request message carries a CCA and the second service domain information.

For example, if service area ranges indicated by the first service domain information are areas 1, 2, and 3, the second service domain information indicates that the service area of the service requested by the first network function network element may be one or more of the areas 1, 2, and 3, and the third service domain information indicates that the service area of the service requested by the first network function network element may be one or more of the areas 1, 2, and 3.

In other words, in this embodiment of this application, when the first network function network element is an NFc (for example, the NWDAF), and the second network function network element is an NFp (for example, the DCCF), the service area indicated by the second service domain information is the same as the service area indicated by the third service domain information. Alternatively, when the first network function network element is an NFc (for example, the DCCF), and the second network function network element is an NFp (for example, the data producer), the service area indicated by the second service domain information is included in the service area indicated by the third service domain information. In this implementation, the DCCF may select one or more NFps. This is not limited in this application. For example, the second service domain information indicates areas 1 and 2. If the DCCF selects one NFp, after the DCCF sends a service request message to the NFp, the NFp provides data in the areas 1 and 2 for the DCCF after verification on the first token succeeds. Alternatively, if the DCCF selects two or more NFps (for example, an NFp 1 and an NFp 2), the DCCF sends a service request message #1 to the NFp 1, where a CCA and information about the area 1 are carried. After verification on the first token succeeds, the NFp 1 provides data in the area 1 for the DCCF. Similarly, the DCCF sends a service request message #2 to the NFp 2, where a CCA and information about the area 2 are carried. After verification on the first token succeeds, the NFp 2 provides data in the area 2 for the DCCF.

S530: The second network function network element determines, based on the first token, whether to provide the service for the first network function network element.

That the second network function network element determines, based on the first token, whether to provide the service for the first network function network element may be understood as that the second network function network element determines, based on the first service domain information in the first token, whether the first network function network element is authorized to use the service; or may be understood as that the second network function network element determines, based on the first service domain information in the first token, to provide the service for the first network function network element or refuse to provide the service for the first network function network element; or may be understood as that the second network function network element provides the requested service (or performs the service) based on the first service domain information in the first token, and sends a response message, or sends a response message indicating that the service request fails; or may be understood as that the second network function network element provides the requested service (or performs the service) based on the first service domain information in the first token, and sends a response message, or sends a response message indicating that the service request is rejected.

In other words, a specific representation form in which the second network function network element determines whether the first network function network element is authorized to use the service may be as follows: When determining that the first network function network element is authorized to use the service, the second network function network element provides the service for the first network function network element; or when determining that the first network function network element is not authorized to use the service, the second network function network element rejects the service request message, to reject the first network function network element that requests the service.

Specifically, the second network function network element performs verification on the first token. When the verification on the first token succeeds, the second network function network element determines to provide the service for the first network function network element.

In an implementation, that the second network function network element performs verification on the first token includes: The second network function network element performs verification on integrity protection of the first token; when the verification on the integrity protection of the first token succeeds, the second network function network element determines whether the service area indicated by the second service domain information belongs to the service area range indicated by the first service domain information; and when the service area indicated by the second service domain information belongs to the service area range indicated by the first service domain information, the second network function network element determines that the verification on the first token succeeds.

That the second network function network element performs verification on the integrity protection of the first token may be that the second network function network element performs verification on a MAC of the first token by using a shared key, to determine whether information in the first token is tampered with; or the second network function network element may perform verification on a signature in claims of the first token by using a private key of the authorization function network element, to determine whether the claims are tampered with. For a specific implementation, refer to the conventional technology. For brevity, details are not described herein again.

Further, when the verification on the integrity protection of the first token succeeds, if the second service domain information indicates service areas 1 and 2, and a service area range authorized by the first service domain information in the first token include service areas 1, 2, and 3, it indicates that the service area indicated by the second service domain information belongs to the service area range indicated by the first service domain information. In this case, the second network function network element determines that the verification on the first token succeeds.

Optionally, when the service request message further includes the CCA, and the CCA includes the identifier of the third network function network element and the third service domain information, the method further includes: The second network function network element determines, based on the CCA, whether to provide the service for the first network function network element.

Specifically, the second network function network element determines whether the service area indicated by the second service domain information is included in the service area range indicated by the third service domain information carried in the CCA; and when the service area indicated by the second service domain information belongs to the service area range indicated by the third service domain information carried in the CCA, the second network function network element determines to provide the first network function network element with data or a model in the area indicated by the second service domain information.

Optionally, the service area indicated by the second service domain information is the same as the service area indicated by the third service domain information.

Optionally, the service area indicated by the second service domain information is included in the service area indicated by the third service domain information.

For example, when the first network function network element is an NFc (for example, the NWDAF), and the second network function network element is an NFp (for example, the DCCF), if the second service domain information indicates service areas 1 and 2, the third service domain information carried in the CCA indicates the service areas 1 and 2, and the first service domain information indicates service areas 1, 2, and 3, it indicates that the service area indicated by the second service domain information is the same as the service area indicated by the third service domain information, and is included in the service area range indicated by the first service domain information. In this case, the DCCF determines that the verification on the first token succeeds, and provides data in the service areas 1 and 2 for the NWDAF.

For example, when the first network function network element is an NFc (for example, the DCCF), and the second network function network element is an NFp (for example, the data producer), if the second service domain information indicates service areas 1 and 2, the third service domain information carried in the CCA indicates the service areas 1 and 2, and the first service domain information indicates service areas 1, 2, and 3, it indicates that the DCCF does not tamper with service area information of the service requested by the third network function network element. In this case, the NFp determines that the verification on the first token succeeds, and provides data in the service areas 1 and 2 for the DCCF. Further, the DCCF provides the data in the service areas 1 and 2 for the NWDAF.

For example, when the first network function network element is an NFc (for example, the DCCF), and the second network function network element is an NFp (for example, the data producer), if the second service domain information sent by the DCCF indicates a service area 1, the third service domain information carried in the CCA indicates service areas 1 and 2, and the first service domain information indicates service areas 1, 2, and 3, an NFp 1 determines that the verification on the first token succeeds, and provides data in the service area 1 for the DCCF. If the second service domain information sent by the DCCF indicates a service area 2, the third service domain information carried in the CCA indicates service areas 1 and 2, and the first service domain information indicates service areas 1, 2, and 3, an NFp 2 determines that the verification on the first token succeeds, and provides data in the service area 2 for the DCCF. Further, the DCCF provides the data in the service areas 1 and 2 for the NWDAF.

In an implementation, the service request message may further include an identifier of the first network function network element, and the first token further includes an identifier of the first network function network element and an identifier of the third network function network element.

Specifically, that the second network function network element performs verification on the first token further includes: The second network function network element determines whether the identifier of the third network function network element carried in the first token is the same as the identifier of the third network function network element carried in the CCA, and whether the identifier of the first network function network element carried in the first token is the same as the identifier of the first network function network element carried in the service request message; and when the identifier of the first network function network element carried in the first token is the same as the identifier of the first network function network element carried in the CCA, and the identifier of the first network function network element carried in the first token is the same as the identifier of the first network function network element carried in the service request message, the second network function network element determines that the verification on the first token succeeds.

For example, if the identifier of the third network function network element carried in the first token is NWDAF _ID, and the identifier of the third network function network element carried in the CCA is also NWDAF _ID; and the identifier of the first network function network element carried in the first token is DCCF_ID, and the identifier of the first network function network element carried in the service request message is also DCCF_ID, it indicates that the identifier of the first network function network element carried in the first token is the same as the identifier of the first network function network element carried in the CCA, and the identifier of the first network function network element carried in the first token is the same as the identifier of the first network function network element carried in the service request message. In this case, the second network function network element determines that the verification on the first token succeeds.

In an implementation, the first token further includes another verification condition, and the second network function network element determines, based on the another verification condition, whether to provide the service for the first network function network element. The another verification condition includes one or more of the following: an NF instance identifier of a service provider, an NF type of the service provider, single network slice selection assistance information of the service provider, a network slice instance identifier of the service provider, an expected identifier of an NF set to which the service provider belongs, an expected service name, and a validity time of the first token.

Specifically, that the second network function network element performs verification on the first token further includes: The second network function network element performs verification on the another verification condition; and when the verification on the another verification condition succeeds, the second network function network element determines that the verification on the first token succeeds.

For example, the another verification condition of the first token further includes: The expected service name is data collection service, the validity period of the first token is 24 h, a generation timestamp of the first token is 10:30, and an expected NFp type is data producer function network element data producer NF. If the second network function network element is a data producer function network element, the service request message received by the second network function network element is used to request data collection, and a current timestamp is 23:30, it indicates that the first token is still within the validity period, and it indicates that the verification on the another verification condition succeeds. In this case, the second network function network element determines that the verification on the first token succeeds.

In an implementation, when any one of the following conditions is met, the second network function network element determines that the verification on the first token fails; and the second network function network element rejects provision of the service for the first network function network element.

The condition includes one or more of the following: The service area indicated by the second service domain information is outside the service area range indicated by the first service domain information; the service area indicated by the second service domain information is outside the service area range indicated by the third service domain information carried in the CCA; the identifier of the third network function network element carried in the first token is different from the identifier of the third network function network element carried in the CCA; the identifier of the first network function network element carried in the first token is different from the identifier of the first network function network element carried in the service request message; or the verification based on the another verification condition fails.

In other words, when performing verification on a parameter carried in the first token, the second network function network element rejects provision of the service for the first network function network element if verification based on any condition fails. For example, the second service domain information carried in the service request message indicates a service area 1, but the first service domain information carried in the first token indicates a service area 2. In this case, the first network function network element may access the service without authorization. Therefore, the second network function network element determines that the verification on the first token fails, and the second network function network element may reject provision of the service for the first network function network element. Optionally, the second network function network element sends, to the first network function network element, a response message indicating that the service request fails. Optionally, a rejection cause is carried, that is, the area of the service requested by the first network function network element is outside an authorized service area range.

S540: The second network function network element provides the service for the first network function network element.

Correspondingly, the first network function network element receives the service from the second network function network element.

Based on the foregoing step S530, the second network function network element provides the service, for example, the data collection service or the model obtaining service, for the first network function network element only when the verification on the first token succeeds. For example, the second network function network element sends a service response message to the first network function network element. The service response message may be an NF Service response message. For example, the service response message includes data or a model.

For example, for the data collection service, a data collection coordination function network element (for example, the DCCF) may receive data from the second network function network element (for example, a data producer function network element), and then forward the data to the third network function network element (for example, the NWDAF). For the model obtaining service, when the verification on the first token succeeds, the second network function network element (for example, an NWDAF MTLE) may obtain a model from an analytics data repository function network element, and then forward the model to the first network function network element (for example, an NWDAF AnLF).

According to the solution provided in this application, in a process in which the first network function network element requests the service from the second network function network element, the second network function network element determines, based on the first token carried in the service request message, whether the first network function network element is authorized to use the service, for example, compares the first service domain information, the network element identifier, another verification condition, or the like carried in the first token with the service domain information, the network element identifier, another verification condition, or the like carried in the service request message, to avoid that a malicious NF service consumer uses the first token to obtain the service without authorization, thereby ensuring network security.

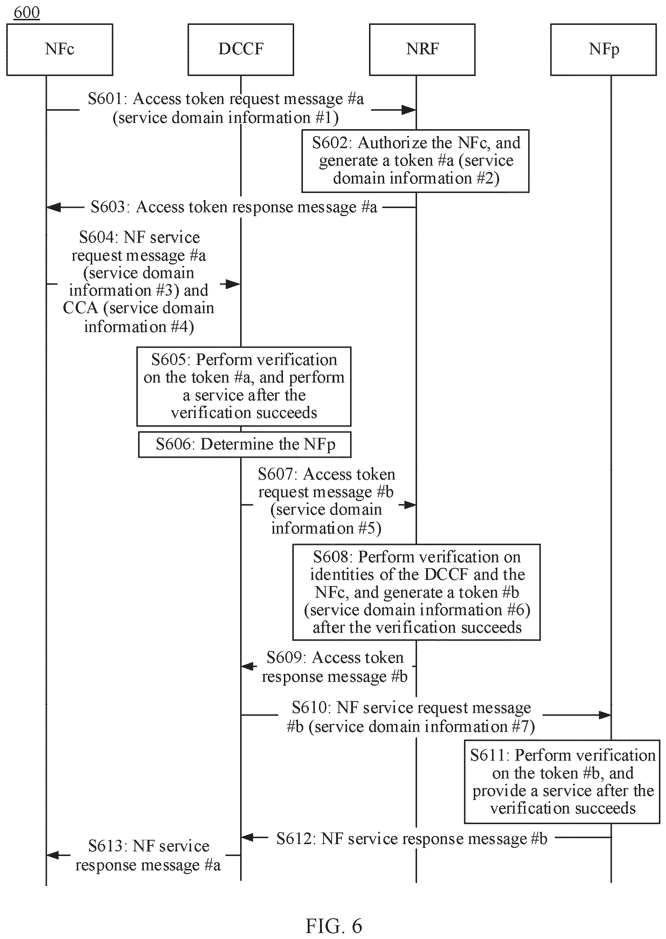

Next, an example in which an NF service consumer is an NFc, an NF service producer is an NFp, an authorization function network element is a network repository function network element NRF, a data collection coordination function network element is a DCCF, and the NFc requests to obtain data from the NFp through the DCCF is used to describe a solution of enhancing an authorization granularity of an access token with reference to FIG. 6 to FIG. 8.

FIG. 6 is a schematic flowchart of a communication method 600 according to an embodiment of this application. In the method, an NFc is authorized to receive data from an NFp through a DCCF. Service domain information is added to an authorization token, service domain information is added to a service request procedure, and data is provided when verification on service domain information of the NFc succeeds, to resolve problems of cross-area unauthorized access of the NFc and data leakage. As shown in FIG. 6, the method includes the following plurality of steps.

S601: The NFc (for example, an NWDAF) sends an access token request message #a to an authorization server (for example, an NRF).

Correspondingly, the NRF receives the access token request message #a from the NFc.

The access token request message #a includes an NF instance ID of the NFc, service domain information #1 (that is, fourth service domain information), an expected NF service name (for example, expected NF service name(s), such as data collection), and an expected NF type (for example, data collection coordination function network element DCCF).

Optionally, the access token request message #a may further include but is not limited to an NF type of the NFc, an expected NSSAI list or NSI ID list of the NFp, an expected NF set ID of the NFp, an S-NSSAI list of the NFc, and the like.

For example, the access token request message #a may be an Nnrf_AccessToken_GetRequest message.

Optionally, the service domain information #a may be a serving area, an area of interest, a service area, TAIs, or the like. For a specific definition, refer to the related descriptions in the method 500. It should be understood that the foregoing names are merely examples provided for ease of understanding of the solution, and the service domain information #a may alternatively have another name. This is not specifically limited in this application.

S602: The NRF authorizes the NFc, and generates a token #a (that is, a first token).

The token #a includes service domain information #2 (that is, first service domain information). It should be understood that a range of the service domain information #2 may be the same as or different from a range of the service domain information #1. This mainly depends on a range in which the NFc requests to use the service (that is, the NFc is allowed to use the service in the service domain) and a service range that can be obtained by the NFc and that is stored in the NRF.

For example, a service range indicated by the service domain information #1 sent by the NFc is an area #1, and an NFc profile stored in the NRF indicates that service areas that can be authorized to the NFc are the area #1 and an area #2. In this case, the service domain information #2 authorized by the NRF may indicate the area #1, that is, the NFc has permission to access an NF service in the area #1. Alternatively, a service range indicated by the service domain information #1 sent by the NFc is an area #1, and an NFc profile stored in the NRF indicates that service areas that can be authorized to the NFc are an area #2 and an area #3. In this case, the service domain information #2 authorized by the NRF does not include the area #1, that is, the NFc has no permission to access an NF service in the area #1, and the NRF may reject the token request. Alternatively, service areas indicated by the service domain information #1 sent by the NFc are an area #1 and an area #3, and an NFc profile stored in the NRF indicates that service areas that can be authorized to the NFc are the area #1 and an area #2. In this case, the service domain information #2 authorized by the NRF may indicate the area #1, that is, the NFc has permission to access an NF service in the area #1, or the NRF may reject the token request. This is not specifically limited in this application. It should be noted that a service area authorized for an NF service is subject to the authorized service domain information #2 in the token #a.

It should be understood that the service domain information #2 may indicate that the NFc is authorized to initiate a service in the service area, or the NFc is authorized to obtain data in the service area. For example, the service requested by the NFc is data collection, and the data has objective area content, for example, an area to which the data belongs. An authorized access area of the data is, for example, an area in which the NFc is allowed to collect the data. Similarly, the service requested by the NFc is model obtaining, and an authorized access area of a model is, for example, an area in which the NFc is allowed to use the model. In particular, when the service is data collection or model obtaining, a range of the service requested by the NFc needs to be included in an access area authorized by the NRF for collecting data or using a model.

In addition, for an implementation in which the NRF authorizes the NFc, refer to related descriptions of step S202 in the method 200. For brevity, details are not described herein again.

S603: The NRF sends an access token response message #a to the NFc.

Correspondingly, the NFc receives the access token response message #a from the NRF.

The access token response message #a indicates that the NFc is authorized to access the DCCF, and the access token response message #a includes the token #a.

Optionally, the access token response message #a may further include a validity period of the token #a, and the token #a usually can be reused within the validity period.

For example, the access token response message #a may be an Nnrf_AccessToken_AccessToken_Get Response message.

S604: The NFc sends an NF service request message #a (that is, a service request message) to the DCCF.

Correspondingly, the DCCF receives the NF service request message #a from the NFc.

The NF service request message #a is used to request to access the NFp to obtain data. The NF service request message #a includes the token #a, service domain information #3 (that is, second service domain information), and a CCA (for example, CCA_NWDAF). The CCA is used by the NRF or the NFp to perform identity verification on the NFc. The CCA includes service domain information #4 (that is, third service domain information).

It should be noted that both the service domain information #3 and the service domain information #4 are subsets of the authorized service domain information #2 in the token #a. For example, if service areas indicated by the service domain information #2 are an area #1 and an area #2, service areas indicated by the service domain information #1 and the service domain information #3 may be the area #1 and/or the area #2, and cannot exceed a range of a service area authorized by the token #a, to avoid a case in which the NFc accesses a service without authorization. For example, the service areas indicated by the service domain information #1 and the service domain information #3 are the same, and may be the area #1.

For example, the NF service request message #a may be an NF Service Request message, for example, an Ndccf_DataManagement_Subscribe message.

S605: The DCCF performs verification on the token #a, and performs the service after the verification succeeds.

For a specific verification manner of the token #a, a specific meaning of the token #a, and information included in the token #a, refer to related descriptions of step S205 in the method 200. For brevity, details are not described herein again.

For example, the DCCF compares the service area indicated by the service domain information #2 carried in the token #a with the service area indicated by the service domain information #3 carried in the NF service request message #a, to ensure that a service area of the service requested by the NFc belongs to a service area authorized by the NRF. Optionally, the DCCF may also verify whether a service area indicated by the service domain information #4 carried in the CCA belongs to the service area indicated by the service domain information #2 in the token #a authorized by the NRF, and verify whether a service area range indicated by the service domain information #4 carried in the CCA is equal to the service area indicated by the service domain information #3 carried in the NF service request message #a.

Therefore, based on the verification in step S205, only when it is determined that the token #a is issued by the NRF and is not maliciously tampered with, the area indicated by the service domain information #3 is included in the area indicated by the service domain information #2, and further optionally, the area indicated by the service domain information #3 is equal to the area indicated by the service domain information #4, the DCCF can determine that the verification on the token #a succeeds, and then perform a subsequent service.

S606: The DCCF determines the NFp.

Specifically, for an implementation in which the DCCF determines the NFp, refer to related descriptions of step S206 in the method 200. For brevity, details are not described herein again. It should be noted that, when selecting the NFp, the DCCF needs to additionally consider service domain information of the NFc carried in the token #a, that is, needs to perform selection to provide a service in a corresponding service area for the NFc. For example, if the service area authorized by the token #a is an area #1, and the service area indicated by the service domain information #3 carried in the NF service request message #a is the area #1, the NFp selected by the DCCF has a capability of providing data in the area #1.

Optionally, an NFp quantity is not limited in this application. For example, if the service areas indicated by the service domain information #3 carried in the NF service request message #a are an area #1 and an area #2, the NFp selected by the DCCF can provide data in both the area #1 and the area #2. Alternatively, an NFp 1 selected by the DCCF may provide data in the area #1, and an NFp 2 selected by the DCCF may provide data in the area #2. A difference lies in that when there are a plurality of NFps, the following steps S607 to S612 are sequentially performed a plurality of times.

S607: The DCCF sends an access token request message #b (that is, a token request message) to the NRF.

Correspondingly, the NRF receives the access token request message #b from the DCCF.

The access token request message #b includes the NF instance ID of the NFc, an NF instance ID of the DCCF, a CCA (for example, carrying the service domain information #4), service domain information #5 (that is, fourth service domain information), an expected NF service name (for example, data collection), and an expected NFp type (for example, data producer function network element data producer NF).

Optionally, if there is one NFp, a service area indicated by the service domain information #5 is the same as that indicated by the service domain information #3. If there are a plurality of NFps, a service area indicated by the service domain information #5 is included in a service area indicated by the service domain information #3.

Optionally, the access token request message #b may further include but is not limited to the NF type (for example, NWDAF) of the NFc, the expected NSSAI list or NSI ID list of the NFp, the expected NF set ID of the NFp, the S-NSSAI list of the NFc, and the like.

For example, the access token request message #b may be an Nnrf_AccessToken_AccessToken_Get Request message.

S608: The NRF performs verification on identities of the DCCF and the NFc, and generates a token #b (that is, a first token) after the verification succeeds.

The first token includes service domain information #6 (that is, first service domain information).

For example, a service area indicated by the service domain information #6 is the same as that indicated by the service domain information #5.

For example, the NRF checks whether the DCCF and the NFc are allowed to access a service provided by the determined NFp. For example, the NRF performs identity verification on the DCCF and NFc according to one of SBA methods.

Further, if the NFp can provide data in all areas requested in an NF service request message #b, the DCCF may select one NFp. In this case, the service area indicated by the service domain information #5 may be the same as that indicated by the service domain information #3. Further, the NRF may further determine whether the service area indicated by the service domain information #5 is equal to the service area range indicated by the service domain information #4 carried in the CCA, to ensure that the DCCF or another network element does not maliciously tamper with the service domain information requested by the NFc, to ensure secure network communication. If the DCCF may select two NFps, that is, an NFp 1 and an NFp 2 may respectively provide data in the area #1 and the area #2 requested in the NF service request message #b, it indicates that the service area indicated by the service domain information #5 is included in the service area indicated by the service domain information #4. Further, the NRF may further determine whether the service area indicated by the service domain information #5 is included in the service area range indicated by the service domain information #4, to ensure that the DCCF or another network element does not maliciously tamper with the service domain information requested by the NFc, to ensure secure network communication. It should be understood that the NRF determines that the verification succeeds and generates the token #b only when the NRF determines that the service area indicated by the service domain information #5 is included in the service area range indicated by the service domain information #4.

Specifically, for an implementation in which the NRF performs verification on the identities of the DCCF and the NFc and generates the token #b, refer to related descriptions of step S208 in the method 200. For brevity, details are not described herein again.

For example, the token #b generated by the NRF includes the NF instance ID of the NFc, the NF instance ID of the DCCF, and the service domain information #2. In other words, for an authorized service area in the token #b, both the service domain information #1 requested in step S607 and the service domain information #3 carried in the CCA need to be considered.

S609: The NRF sends an access token response message #b to the DCCF.

Correspondingly, the DCCF receives the access token response message #b from the NRF.

The access token response message #b indicates that the NFc and the DCCF are authorized to access the NFp, and the access token response message #b includes the token #b.

Optionally, the access token response message #b may further include a validity period of the token #b, and the token #b usually can be reused within the validity period.

For example, the access token response message #b may be an Nnrf_AccessToken_AccessToken_Get Response message.

S610: The DCCF sends an NF service request message #b (that is, a service request message) to the NFp.

Correspondingly, the NFp receives the NF service request message #b from the DCCF.

The NF service request message #b is used to request to obtain data, and the NF service request message #b includes service domain information #7 (that is, second service domain information), the token #b (carrying the service domain information #6), and the CCA (carrying the service domain information #4).

For example, a service area indicated by the service domain information #7 is the same as that indicated by the service domain information #5, the service area indicated by the service domain information #7 is included in the service area indicated by the service domain information #4, and the service area indicated by the service domain information #7 is included in the service area indicated by the service domain information #6.

For example, the NF service request message #b may be an NF Service Request message.

S611: The NFp performs verification on the token #b, and provides the service after the verification succeeds.

For example, the NFp compares the service domain information #6 in the token #b with the service domain information #7 in the NF service request message #b, to ensure that the service area indicated by the service domain information #7 is included in the service area range indicated by the service domain information #6. In addition, the NFp further determines whether the service area range indicated by the service domain information #4 in the CCA includes the service area indicated by the service domain information #7 in the NF service request message #b, to ensure that the service domain information #a requested by the NFc is not maliciously tampered with by the DCCF in a transmission process. Only when it is ensured that verification on the foregoing content succeeds, the NFp can determine that the verification on the token #b succeeds, and then perform a subsequent service, that is, provide data in a specified service area range (that is, the service domain information #7) for the DCCF.

Specifically, for an implementation in which the NFp performs verification on the identities of the NFc and the DCCF and performs verification on another parameter carried in the token #b, refer to related descriptions of step S211 in the method 200. For brevity, details are not described herein again.

S612: The NFp sends an NF service response message #b to the DCCF.

Correspondingly, the DCCF receives the NF service response message #b from the NFp.

The NF service response message #b includes the data requested by the NFc.

For example, the NF service response message #b may be an NF Service Response via notification message.

It should be understood that the NFp performs the service when the verification on the token #b succeeds. On the contrary, the NFp refuses to provide the service.

S613: The DCCF sends an NF service response message #a to the NFc.

Correspondingly, the NFc receives the NF service response message #a from the DCCF.

The NF service response message #a includes the data requested by the NFc.

For example, the NF service response message #a may be an NF Service Response via notification message.

According to the method disclosed in this application, service domain information is added to an access token (for example, the token #a and the token #b), to limit a service range requested by the NFc, and a service is provided only when the NRF successfully verifies the service domain information. This resolves a problem of cross-area unauthorized access of the NFc, and can ensure network communication security, and improve user experience.

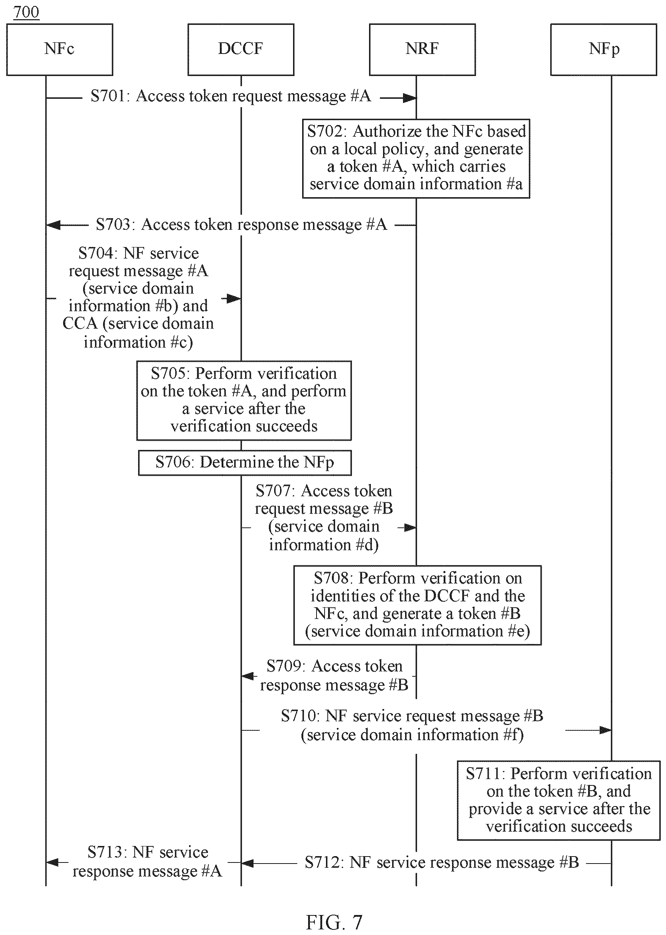

FIG. 7 is a schematic flowchart of a communication method 800 according to an embodiment of this application. In the method, an NFc is authorized to receive data from an NFp through a DCCF. Service domain information is added to an authorization token, service domain information is added to a service request procedure, and data is provided when verification on service domain information of the NFc succeeds, to resolve problems of cross-area unauthorized access of the NFc and data leakage. Compared with the method 600, in the method 700, when the NFc requests to obtain an access token and requests to obtain an NF service, service domain information may not be carried, and correspondingly, an NRF and the DCCF may complete authorization based on a local policy. As shown in FIG. 7, the method includes the following plurality of steps.

S701: The NFc (for example, an NWDAF) sends an access token request message #A (that is, a token request message) to an authorization function network element (for example, the NRF).

Correspondingly, the NRF receives the access token request message #A from the NFc.

The access token request message #a includes an NF instance ID of the NFc, an expected NF service name (for example, data collection), and an expected NF type (for example, data collection coordination function network element DCCF).

Optionally, the access token request message #A may further include but is not limited to an NF type of the NFc, an expected NSSAI list or NSI ID list of the NFp, an expected NF set ID of the NFp, an S-NSSAI list of the NFc, and the like.

For example, the access token request message #A may be an Nnrf_AccessToken_GetRequest message.

S702: The NRF authorizes the NFc based on a local policy, and generates a token #A (that is, a first token).

The token #A includes service domain information #a (that is, first service domain information). It should be noted that a service area authorized for an NF service is subject to the authorized service domain information #a in the token #A.

Optionally, the service domain information #a may be a serving area, an area of interest, a service area, TAIs, or the like. For a specific meaning of the service domain information #a, refer to related descriptions of step S701 in the method 700. For brevity, details are not described herein again.

For example, when the NFc requests to obtain an access token, the NRF may further authorize, based on NF service areas, for example, an area #1 and an area #2, supported by a capability of the NFc indicated in a locally stored NFc profile, the NFc to request NF services in the area #1 and the area #2 from the NFp. In other words, the service domain information #a includes information indicating the area #1 and the area #2.

S703: The NRF sends an access token response message #A to the NFc.

Correspondingly, the NFc receives the access token response message #A from the NRF.

The access token response message #A includes the token #A.

Optionally, the access token response message #A may further include a validity period of the token #A, and the token #A usually can be reused within the validity period.

For example, the access token response message #A may be an Nnrf_AccessToken_AccessToken_Get Response message.

S704: The NFc sends an NF service request message #A (that is, a service request message) to the DCCF.

Correspondingly, the DCCF receives the NF service request message #A from the NFc.

The NF service request message #A is used to request to access the NFp to obtain data. The NF service request message #A includes service domain information #b (that is, second service domain information), the token #A, and a CCA (for example, CCA_NWDAF), used by the NRF or the NFp to perform identity verification on the NFc. The CCA includes service domain information #c (that is, third service domain information). It should be noted that both the service domain information #b and the service domain information #c are subsets of the authorized service domain information #a in the token #A. For example, if service areas indicated by the service domain information #a are an area #1 and an area #2, service areas indicated by the service domain information #b and the service domain information #c may be the area #1 and/or the area #2, and cannot exceed a range of a service area authorized by the token #A, to avoid a case in which the NFc accesses a service without authorization. For example, the service areas indicated by the service domain information #b and the service domain information #c are the same, and may be the area #1.

For example, the NF service request message #A may be an Ndccf_DataManagement_Subscribe message.

S705: The DCCF performs verification on the token #A, and performs the service after the verification succeeds.

For a specific verification manner of the token #a, a specific meaning of the token #a, and information included in the token #a, refer to related descriptions of step S605 in the method 600. For brevity, details are not described herein again.

Specifically, for verification on other information of the token #A and other information included in the token #A, refer to related descriptions of step S605 in the method 600. For brevity, details are not described herein again.

S706: The DCCF determines the NFp.

Specifically, for an implementation in which the DCCF determines the NFp, refer to related descriptions of step S606 in the method 600. For brevity, details are not described herein again.

S707: The DCCF sends an access token request message #B (that is, a token request message) to the NRF.

Correspondingly, the NRF receives the access token request message #B from the DCCF.

The access token request message #B includes service domain information #d (that is, fourth service domain information), the NF instance ID of the NFc, the NF instance ID of the DCCF, a CCA (carrying the service domain information #c), an expected NF service name (for example, data collection), and an expected NFp type (for example, data producer function network element data producer NF).

Optionally, if there is one NFp, a service area indicated by the service domain information #d is the same as that indicated by the service domain information #b. If there are a plurality of NFps, a service area indicated by the service domain information #d is included in a service area indicated by the service domain information #b.

Optionally, the access token request message #B may further include but is not limited to the NF type (for example, NWDAF) of the NFc, the expected NSSAI list or NSI ID list of the NFp, the expected NF set ID of the NFp, the S-NSSAI list of the NFc, and the like.

For example, the access token request message #B may be an Nnrf_AccessToken_AccessToken_Get Request message.

S708: The NRF performs verification on identities of the DCCF and the NFc, and generates a token #B (that is, a first token).

The first token includes service domain information #e (that is, first service domain information).

For example, a service area indicated by the service domain information #d is the same as that indicated by the service domain information #e.

For example, the NRF checks, based on locally stored profiles of the DCCF and the NFc, whether the DCCF and the NFc are allowed to access a service provided by the determined NFp.

Further, if the NFp can provide data in all areas requested in an NF service request message #b, the DCCF may select one NFp. In this case, the service area indicated by the service domain information #5 may be the same as that indicated by the service domain information #3. Further, the NRF may further determine whether the service area range indicated by the service domain information #c carried in the CCA is equal to the service area indicated by the service domain information #d carried in the access token request message #B, to ensure that the DCCF or another network element does not maliciously tamper with the service domain information requested by the NFc, to ensure secure network communication. If the DCCF may select two NFps, that is, an NFp 1 and an NFp 2 may respectively provide data in the area #1 and the area #2 requested in the NF service request message #B, it indicates that the service area indicated by the service domain information #d is included in the service area indicated by the service domain information #c. Further, the NRF may further determine whether the service area indicated by the service domain information #d is included in the service area range indicated by the service domain information #c, to ensure that the DCCF or another network element does not maliciously tamper with the service domain information requested by the NFc, to ensure secure network communication. It should be understood that the NRF determines that the verification succeeds and generates the token #B only when the NRF determines that the service area indicated by the service domain information #d is included in the service area indicated by the service domain information #c.

S709: The NRF sends an access token response message #B to the DCCF.

Correspondingly, the DCCF receives the access token response message #B from the NRF.

The access token response message #B includes the token #B.

Optionally, the access token response message #B may further include a validity period of the token #B, and the token #B usually can be reused within the validity period.

For example, the access token response message #B may be an Nnrf_AccessToken_AccessToken_Get Response message.

S710: The DCCF sends an NF service request message #B (that is, a service request message) to the NFp.

Correspondingly, the NFp receives the NF service request message #B from the DCCF.

The NF service request message #B is used to request to obtain data, and the NF service request message #B includes service domain information #f (that is, second service domain information), the token #B (the service domain information #e), and the CCA (the service domain information #c).

For example, a service area indicated by the service domain information #f is the same as that indicated by the service domain information #d, the service area indicated by the service domain information #f is included in the service area indicated by the service domain information #e, and the service area indicated by the service domain information #f is included in the service area indicated by the service domain information #c.

For example, the NF service request message #B may be an NF Service Request message.

S711: The NFp performs verification on the token #B, and provides the service after the verification succeeds.

For example, the NFp compares the service domain information #e in the token #B with the service domain information #f carried in the NF service request message #B, to ensure that the service area indicated by the service domain information #f is included in the service area range indicated by the service domain information #e. In addition, the NFp further determines whether the service area range indicated by the service domain information #c in the CCA includes the service area indicated by the service domain information #f in the NF service request message #B, to ensure that the service domain information #A requested by the NFc is not maliciously tampered with by the DCCF in a transmission process. Only when it is ensured that verification on the foregoing content succeeds, the NFp can determine that the verification on the token #B succeeds, and then perform a subsequent service, that is, provide data in a specified service area range (that is, the service domain information #f) for the DCCF.

Specifically, for an implementation in which the NFp performs verification on the identities of the NFc and the DCCF and performs verification on another parameter carried in the token #B, refer to related descriptions of step S611 in the method 600. For brevity, details are not described herein again.

S712: The NFp sends an NF service response message #B to the DCCF.

Correspondingly, the DCCF receives the NF service response message #B from the NFp.

The NF service response message #B includes the data requested by the NFc.

For example, the NF service response message #B may be an NF Service Response via notification message.

S713: The DCCF sends an NF service response message #A to the NFc.

Correspondingly, the NFc receives the NF service response message #A from the DCCF.

The NF service response message #A includes the data requested by the NFc.

For example, the NF service response message #A may be an NF Service Response via notification message.

According to the method disclosed in this application, service domain information is added to an access token (for example, the token #A and the token #B), to limit a service range requested by the NFc, and a service is provided only when the NRF successfully verifies the service domain information. This resolves a problem of cross-area unauthorized access of the NFc, and can ensure network communication security, and improve user experience.

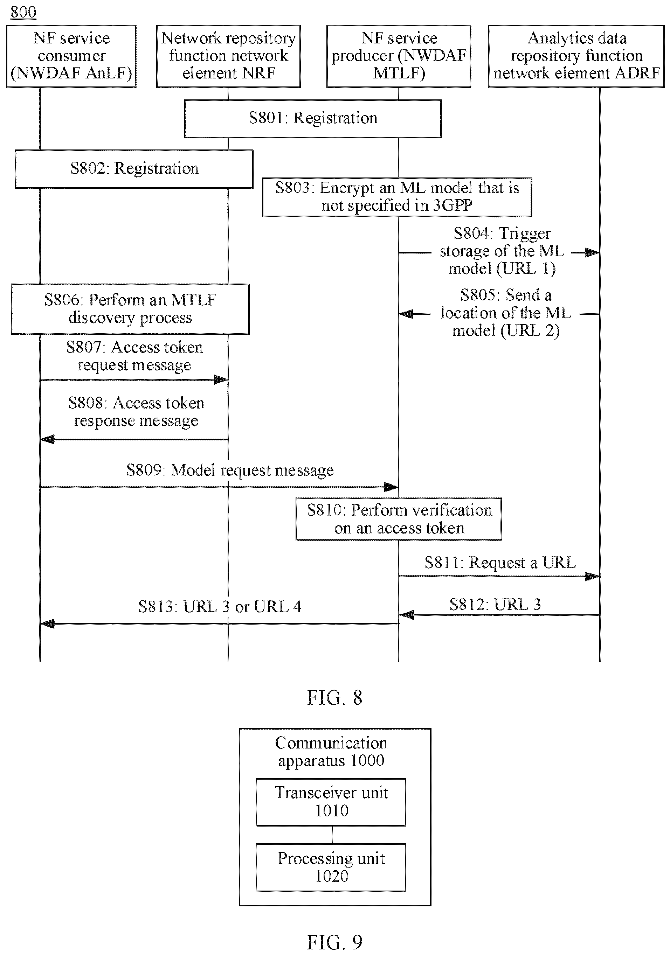

FIG. 8 is a schematic flowchart of a communication method 800 according to an embodiment of this application. In the method, an NFc requests, from an ADRF, to obtain an ML model trained by an NFp. Service domain information is added to an authorization token, service domain information is added to a service request procedure, and the model is provided when verification on service domain information of the NFc succeeds, to resolve problems of cross-area unauthorized access of the NFc and model leakage. As shown in FIG. 8, the method includes the following plurality of steps.

S801: The NF service producer NFp (for example, an NWDAF MTLE) performs registration.

S802: The NF service consumer NFc (for example, an NWDAF AnLF) performs registration.

For specific implementations of registration in steps S810 and S802, refer to steps S401 and S402 in the method 400. For brevity, details are not described herein again.

S803: The NFp encrypts an ML model that is not specified in 3GPP.

A specific encryption method is not limited in embodiments of this application.

S804: The NFp triggers storage of the ML model.

For example, the NFp requests the ADRF to store the ML model, and a storage address is a URL 1.

S805: The ADRF sends a storage location of the ML model to the NFp.

For example, a storage location of the ML model in the ADRF is a URL 2.

S806: Perform an MTLF discovery process between the NFc and the NRF.

For specific implementations of steps S803 to S806, refer to steps S303 and S306 in the method 300. For brevity, details are not described herein again.

S807: The NFc sends an access token request message (that is, a token request message) to the NRF.

Correspondingly, the NRF receives the access token request message from the NFc.

The access token request message includes an NF instance ID of the NFc, an expected NF service name (for example, expected NF service name(s), such as model obtaining), an expected NF type, and an analytic ID. It should be understood that the analytic ID is associated with one or more ML models.

Optionally, the access token request message includes service domain information #A (that is, fourth service domain information).

For example, the access token request message may be an Nnrf_AccessToken_AccessToken_Get Response message.

S808: The NRF sends an access token response message to the NFc.

Correspondingly, the NFc receives the access token response message from the NRF.

For example, if the access token request message in step S807 carries the service domain information #A, the NRF performs, based on locally configured service domain information Service Area, verification on the service domain information #A carried in the access token request information. If the request is allowed, that is, a service area indicated by the service domain information #A is included in a service area indicated by the service domain information locally configured in the NRF, the access token response message includes a token #A, and the token #A includes service domain information #B (that is, first service domain information) and an operator ID of the NFc. For example, if the service domain information #A indicates an area #1, but the service domain information locally configured in the NRF indicates an area #2, the service domain information #B in the token #A returned by the NRF to the NFc indicates the area #2. In this case, the service domain information #B is different from the service domain information #A. For another example, if the service domain information #A indicates an area #1, and the service domain information locally configured in the NRF indicates the area #1 and an area #2, the service domain information #B in the token #A returned by the NRF to the NFc indicates the area #1. In this case, the service domain information #B is the same as the service domain information #A.

Optionally, if the access token request message in step S807 does not carry the service domain information #A, the NRF adds the locally configured service domain information #B to the token #A, for subsequent token verification performed by the NFp. It should be noted that a service area authorized for an NF service is subject to the authorized service domain information #B in the token #A. The following embodiment is specifically described by using an example in which the access token request message in step S807 carries the service domain information #A, and the token #A in the access token response message in step S808 carries the service domain information #B.

For example, the access token response message may be an Nnrf_AccessToken_Get Response message.

In other words, before step S808 is performed, the NRF needs to authorize the NFc. For a specific implementation, refer to related descriptions of step S202 in the method 200. For brevity, details are not described herein again.

S809: The NFc sends an ML model request message (that is, a service request message) to the NFp.

Correspondingly, the NFp receives the ML model request message from the NFc.

The ML model request message includes the token #A, the analytic ID, and service domain information #C (that is, second service domain information), and the token #A includes the service domain information #B and the operator ID of the NFc.

For example, the ML model request message may be a model request message.

S810: The NFp performs verification on the token #A.

For example, for an implementation in which the NFp performs verification on the token #A, refer to step S310 in the method 300. For brevity, details are not described herein again. Further, it should be specially noted that, the NFp needs to compare the service domain information #B in the token #A with the service domain information #C carried in the ML model request message. Only when it is determined that a service area indicated by the service domain information #C is included in the service area indicated by the service domain information #B, the NFp can determine that the verification on the token #A succeeds, and provide a service for the NFc, that is, perform subsequent steps S811 to S813, to provide the NFc with a model within a specified service area range (that is, the service domain information #C).

S811: The NFp sends a URL request message to the ADRF.

Correspondingly, the ADRF receives the URL request message from the NFp.

The URL request message includes a model association identifier (for example, a model correction ID) or the URL 2.

S812: The ADRF sends a URL 3 to the NFp.

Correspondingly, the NFp receives the URL 3 from the ADRF.

S813: The NFp sends the URL 3 or a URL 4 to the NFc.

Correspondingly, the NFc receives the URL 3 or the URL 4 from the NFp.

For specific implementations of steps S811 to S813, refer to steps S311 to S313 in the method 300. For brevity, details are not described herein again.

According to the method disclosed in this application, service domain information is added to an access token (for example, the token #A), to limit a service range requested by the NFc. The NRF completes access authorization for a specific service area based on a local configuration, and provides a service for the NFc only when verification on the service domain information succeeds. This resolves a problem of cross-area unauthorized access of the NFc, and can ensure network communication security, and improve user experience.

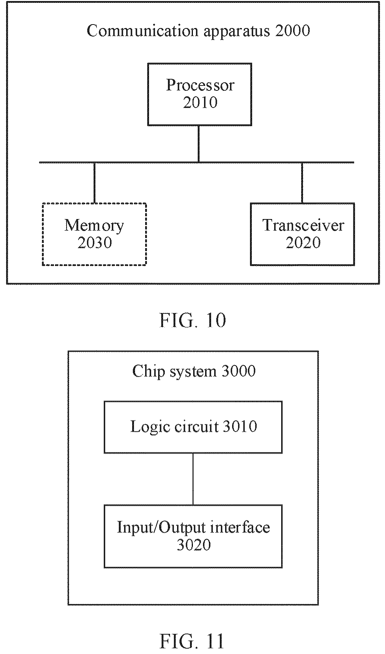

The foregoing describes in detail embodiments on a communication method side in this application with reference to FIG. 1 to FIG. 8. The following describes in detail embodiments on a communication apparatus side in this application with reference to FIG. 9 and FIG. 10. It should be understood that descriptions of the apparatus embodiments correspond to the descriptions of the method embodiments, and therefore for a part that is not described in detail, refer to the foregoing method embodiments.

FIG. 9 is a block diagram of a communication apparatus according to an embodiment of this application. As shown in FIG. 9, the device 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the device 1000 may implement a step or procedure performed by the first network function network element (for example, the NFc) in the foregoing method embodiments. The processing unit 1020 is configured to perform a processing-related operation of the NFc in the foregoing method embodiments. The transceiver unit 1010 is configured to perform a receiving/sending-related operation of the NFc in the foregoing method embodiments.

In another possible design, the device 1000 may implement a step or procedure performed by the second network function network element (for example, the NFp) in the foregoing method embodiments. The transceiver unit 1010 is configured to perform a receiving/sending-related operation of the NFp in the foregoing method embodiments. The processing unit 1020 is configured to perform a processing-related operation of the NFp in the foregoing method embodiments.

In another possible design, the device 1000 may implement a step or procedure performed by the authorization function network element (for example, the NRF) in the foregoing method embodiments. The transceiver unit 1010 is configured to perform a receiving/sending-related operation of the NRF in the foregoing method embodiments. The processing unit 1020 is configured to perform a processing-related operation of the NRF in the foregoing method embodiments.

It should be understood that the device 1000 herein is embodied in a form of a functional unit. The term "unit" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the device 1000 may be specifically the transmitter in the foregoing embodiments, and may be configured to perform procedures and/or steps corresponding to the transmitter in the foregoing method embodiments; or the device 1000 may be specifically the receiver in the foregoing embodiments, and may be configured to perform procedures and/or steps corresponding to the receiver in the foregoing method embodiments. To avoid repetition, details are not described herein again.

The device 1000 in the foregoing solutions has a function of implementing corresponding steps performed by the transmitter in the foregoing methods, or the device 1000 in the foregoing solutions has a function of implementing corresponding steps performed by the receiver in the foregoing methods. The function may be implemented by using hardware, or may be implemented by using hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

In addition, the transceiver unit may alternatively be a transceiver circuit (for example, the transceiver circuit may include a receiver circuit and a transmitter circuit), and the processing unit may be a processing circuit. In embodiments of this application, the apparatus in FIG. 9 may be the receiver or the transmitter in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 10 shows another communication apparatus 2000 according to an embodiment of this application. As shown in FIG. 10, the device 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the device 2000 may further include a memory 2030. The memory 2030 communicates with the processor 2010 and the transceiver 2020 through the internal connection path. The memory 2030 is configured to store the instructions. The processor 2010 may execute the instructions stored in the memory 2030.

In a possible implementation, the device 2000 is configured to implement procedures and steps corresponding to the first network function network element in the foregoing method embodiments.

In another possible implementation, the device 2000 is configured to implement procedures and steps corresponding to the second network function network element in the foregoing method embodiments.

In another possible implementation, the device 2000 is configured to implement procedures and steps corresponding to the authorization function network element in the foregoing method embodiments.

It should be understood that, the device 2000 may be specifically the transmitter or the receiver in the foregoing embodiments, or may be a chip or a chip system. Correspondingly, the transceiver 2020 may be a transceiver circuit of the chip. This is not limited herein. Specifically, the device 2000 may be configured to perform steps and/or procedures corresponding to the transmitter or the receiver in the foregoing method embodiments.

Optionally, the memory 2030 may include a read-only memory and a random access memory, and provides instructions and data for the processor. A part of the memory may further include a non-volatile random access memory. For example, the memory may further store information about a device type. The processor 2010 may be configured to execute the instructions stored in the memory. When the processor 2010 executes the instructions stored in the memory, the processor 2010 is configured to perform the steps and/or procedures in the foregoing method embodiments corresponding to the transmitter or the receiver.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, such as a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory for the system and the method described in this specification aims to include but is not limited to these memories and any memory of another appropriate type.

FIG. 11 is a diagram of a chip system 3000 according to an embodiment of this application. The chip system 3000 (or may be referred to as a processing system) includes a logic circuit 3010 and an input/output interface (input/output interface) 3020.

The logic circuit 3010 may be a processing circuit in the chip system 3000. The logic circuit 3010 may be coupled to a storage unit, and invoke instructions in the storage unit, so that the chip system 3000 can implement the methods and functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement the operations performed by the first network function network element, the first network function network element, or the repository function network element in the foregoing method embodiments.

An embodiment of this application further provides a computer-readable storage medium. The computer-readable storage medium stores computer instructions used to implement the method performed by the device (for example, the NFc, the NFp, the DCCF or ADRF, or the NRF) in the foregoing method embodiments.

An embodiment of this application further provides a computer program product, including instructions. When the instructions are executed by a computer, the method performed by the device (for example, the NFc, the NFp, the DCCF or ADRF, or the NRF) in the foregoing method embodiments is implemented.

An embodiment of this application further provides a communication system, including one or more of the foregoing NFc, NFp, DCCF or ADRF, NRF, or the like.

For explanations and beneficial effects of related content of any one of the apparatuses provided above, refer to the corresponding method embodiment provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device to perform all or some of the steps of the method described in embodiments of this application. The foregoing storage medium includes any medium that can store program code, for example, a USB flash disk, a removable hard disk, a read-only memory, a random access memory, a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a second network function network element, a service request message from a first network function network element, wherein the service request message is used to request the second network function network element to provide a service for the first network function network element, the service request message comprises a first token and second service domain information, the second service domain information indicates a service area of the service requested by the first network function network element, the first token comprises first service domain information, and the first service domain information indicates a service area range in which the first network function network element is capable of obtaining the service from the second network function network element; and
determining, by the second network function network element based on the first token, whether to provide the service for the first network function network element.

2. The method according to claim 1, wherein determining, by the second network function network element based on the first token, whether to provide the service for the first network function network element comprises:
performing, by the second network function network element, verification on the first token; and
when the verification on the first token succeeds, determining, by the second network function network element, to provide the service for the first network function network element.

3. The method according to claim 2, wherein performing, by the second network function network element, verification on the first token comprises:
performing, by the second network function network element, verification on integrity protection of the first token;
when the verification on the integrity protection of the first token succeeds, determining, by the second network function network element, whether the service area indicated by the second service domain information belongs to the service area range indicated by the first service domain information; and
when the service area indicated by the second service domain information belongs to the service area range indicated by the first service domain information, determining, by the second network function network element, that the verification on the first token succeeds.

4. The method according to any one of claims 1 to 3, wherein the service request message further comprises a client credentials assertion CCA, the client credentials assertion CCA comprises an identifier of a third network function network element and third service domain information, and the third service domain information indicates a service area of the service requested by the third network function network element.

5. The method according to claim 4, wherein the method further comprises:
determining, by the second network function network element based on the CCA, whether to provide the service for the first network function network element, specifically comprising:
determining, by the second network function network element, whether the service area indicated by the second service domain information is comprised in a service area range indicated by the third service domain information carried in the CCA; and
when the service area indicated by the second service domain information is comprised in the service area range indicated by the third service domain information carried in the CCA, determining, by the second network function network element, to provide the service for the first network function network element.

6. The method according to claim 5, wherein the service request message further comprises an identifier of the first network function network element, the first token further comprises an identifier of the first network function network element and an identifier of the third network function network element, and performing, by the second network function network element, verification on the first token further comprises:
determining, by the second network function network element, whether the identifier of the third network function network element carried in the first token is the same as the identifier of the third network function network element carried in the CCA, and whether the identifier of the first network function network element carried in the first token is the same as the identifier of the first network function network element carried in the service request message; and
when the identifier of the first network function network element carried in the first token is the same as the identifier of the first network function network element carried in the CCA, and the identifier of the first network function network element carried in the first token is the same as the identifier of the first network function network element carried in the service request message, determining, by the second network function network element, that the verification on the first token succeeds.

7. The method according to claim 6, wherein the first token further comprises another verification condition, and the method further comprises:
determining, by the second network function network element based on the another verification condition, whether to provide the service for the first network function network element, wherein the another verification condition comprises one or more of the following:
an NF instance identifier of a service provider, an NF type of the service provider, single network slice selection assistance information of the service provider, a network slice instance identifier of the service provider, an expected identifier of an NF set to which the service provider belongs, an expected service name, and a validity time of the first token.

8. The method according to claim 7, wherein the method further comprises:
when verification based on the another verification condition succeeds, determining, by the second network function network element, that the verification on the first token succeeds.

9. The method according to claim 7 or 8, wherein the method further comprises:
when any one of the following conditions is met, determining, by the second network function network element, that the verification on the first token fails; and
rejecting, by the second network function network element, provision of the service for the first network function network element, wherein
the condition comprises one or more of the following:
the service area indicated by the second service domain information is outside the service area range indicated by the first service domain information;
the service area indicated by the second service domain information is outside the service area range indicated by the third service domain information;
the identifier of the third network function network element carried in the first token is different from the identifier of the third network function network element carried in the CCA;
the identifier of the first network function network element carried in the first token is different from the identifier of the first network function network element carried in the service request message; or
the verification based on the another verification condition fails.

10. The method according to any one of claims 1 to 9, wherein the service area indicated by the second service domain information is comprised in the service area range indicated by the first service domain information.

11. The method according to any one of claims 1 to 10, wherein the service comprises any one of the following: a data collection service or a model obtaining service; and
when the service is the data collection service, the first service domain information indicates an area range in which the first network function network element is capable of obtaining data from the second network function network element; or
when the service is the model obtaining service, the first service domain information indicates an area range in which the first network function network element is capable of obtaining a model from the second network function network element.

12. A communication method, comprising:
obtaining, by a first network function network element, a first token, wherein the first token comprises first service domain information, and the first service domain information indicates a service area range in which the first network function network element is capable of obtaining a service from a second network function network element;
sending, by the first network function network element, a service request message to the second network function network element, wherein the service request message is used to request the second network function network element to provide the service for the first network function network element, the service request message comprises the first token and second service domain information, and the second service domain information indicates a service area of the service requested by the first network function network element; and
receiving, by the first network function network element, the service from the second network function network element.

13. The method according to claim 12, wherein obtaining, by the first network function network element, the first token comprises:
sending, by the first network function network element, a token request message to an authorization function network element, wherein the token request message comprises an identifier of the service, an identifier of the first network function network element, and an identifier of the second network function network element or a network element type of the second network function network element; and
receiving, by the first network function network element, the first token from the authorization function network element.

14. The method according to claim 13, wherein the token request message further comprises fourth service domain information, and the fourth service domain information indicates the service area of the service requested by the first network function network element.

15. The method according to claim 14, wherein the token request message further comprises a client credentials assertion CCA, the CCA comprises an identifier of a third network function network element and third service domain information, and the third service domain information indicates a service area of the service requested by the third network function network element.

16. The method according to claim 15, wherein the service request message further comprises the CCA.

17. The method according to any one of claims 12 to 16, wherein the service area indicated by the second service domain information is comprised in the service area range indicated by the first service domain information.

18. The method according to any one of claims 12 to 17, wherein the service comprises any one of the following: a data collection service or a model obtaining service; and
when the service is the data collection service, the first service domain information indicates an area range in which the first network function network element is capable of obtaining data from the second network function network element; or
when the service is the model obtaining service, the first service domain information indicates an area range in which the first network function network element is capable of obtaining a model from the second network function network element.

19. A communication method, comprising:
receiving, by an authorization function network element, a token request message from a first network function network element, wherein the token request message comprises an identifier of a service, an identifier of the first network function network element, and an identifier of a second network function network element or a type of a second network function network element;
generating, by the authorization function network element, a first token when determining that the first network function network element is authorized to obtain the service, wherein the first token comprises first service domain information, and the first service domain information indicates a service area range in which the first network function network element is capable of obtaining the service from the second network function network element; and
sending, by the authorization function network element, the first token to the first network function network element.

20. The method according to claim 19, wherein the token request message further comprises fourth service domain information, and the fourth service domain information indicates a service area of the service requested by the first network function network element.

21. The method according to claim 20, wherein the token request message further comprises a client credentials assertion CCA, the CCA comprises an identifier of a third network function network element and third service domain information, and the third service domain information indicates a service area of the service requested by the third network function network element.

22. The method according to claim 21, wherein generating, by the authorization function network element, the first token comprises:
determining, by the authorization function network element, whether the service area indicated by the fourth service domain information is comprised in a service area range indicated by the third service domain information carried in the CCA; and
generating, by the authorization function network element, the first token when determining that the service area indicated by the fourth service domain information is comprised in the service area range indicated by the third service domain information carried in the CCA.

23. The method according to any one of claims 19 to 22, wherein the service comprises any one of the following: a data collection service or a model obtaining service; and
when the service is the data collection service, the first service domain information indicates an area range in which the first network function network element is capable of obtaining data from the second network function network element; or
when the service is the model obtaining service, the first service domain information indicates an area range in which the first network function network element is capable of obtaining a model from the second network function network element.

24. A communication method, comprising:
obtaining, by a first network function network element, a first token, wherein the first token comprises first service domain information, and the first service domain information indicates a service area range in which the first network function network element is capable of obtaining a service from a second network function network element;
sending, by the first network function network element, a service request message to the second network function network element, and receiving, by the second network function network element, the service request message from the first network function network element, wherein the service request message is used to request the second network function network element to provide the service for the first network function network element, the service request message comprises the first token and second service domain information, and the second service domain information indicates a service area of the service requested by the first network function network element; and
determining, by the second network function network element based on the first token, whether to provide the service for the first network function network element.

25. The method according to claim 24, wherein determining, by the second network function network element based on the first token, whether to provide the service for the first network function network element comprises:
performing, by the second network function network element, verification on the first token;
when the verification on the first token succeeds, determining, by the second network function network element, to provide the service for the first network function network element; and
receiving, by the first network function network element, the service from the second network function network element.

26. The method according to claim 25, wherein performing, by the second network function network element, verification on the first token comprises:
performing, by the second network function network element, verification on integrity protection of the first token;
when the verification on the integrity protection of the first token succeeds, determining, by the second network function network element, whether the service area indicated by the second service domain information belongs to the service area range indicated by the first service domain information; and
when the service area indicated by the second service domain information belongs to the service area range indicated by the first service domain information, determining, by the second network function network element, that the verification on the first token succeeds.

27. The method according to any one of claims 24 to 26, wherein obtaining, by the first network function network element, the first token comprises:
sending, by the first network function network element, a token request message to an authorization function network element, and receiving, by the authorization function network element, the token request message from the first network function network element, wherein the token request message comprises an identifier of the service, an identifier of the first network function network element, and an identifier of the second network function network element or a network element type of the second network function network element;
generating, by the authorization function network element, the first token when determining that the first network function network element is authorized to obtain the service, wherein the first token comprises the first service domain information, and the first service domain information indicates the service area range in which the first network function network element is capable of obtaining the service from the second network function network element; and
sending, by the authorization function network element, the first token to the first network function network element, and receiving, by the first network function network element, the first token from the authorization function network element.

28. The method according to claim 27, wherein the token request message further comprises fourth service domain information, and the fourth service domain information indicates the service area of the service requested by the first network function network element.

29. The method according to claim 28, wherein the token request message further comprises a client credentials assertion CCA, the CCA comprises an identifier of a third network function network element and third service domain information, and the third service domain information indicates a service area of the service requested by the third network function network element.

30. The method according to claim 29, wherein the service request message further comprises the CCA.

31. The method according to claim 29 or 30, wherein generating, by the authorization function network element, the first token comprises:
determining, by the authorization function network element, whether the service area indicated by the fourth service domain information is comprised in a service area range indicated by the third service domain information carried in the CCA; and
generating, by the authorization function network element, the first token when determining that the service area indicated by the fourth service domain information is comprised in the service area range indicated by the third service domain information carried in the CCA.

32. The method according to any one of claims 29 to 31, wherein the method further comprises:
determining, by the second network function network element based on the CCA, whether to provide the service for the first network function network element, specifically comprising:
determining, by the second network function network element, whether the service area indicated by the second service domain information is comprised in the service area range indicated by the third service domain information carried in the CCA; and
when the service area indicated by the second service domain information is comprised in the service area range indicated by the third service domain information carried in the CCA, determining, by the second network function network element, to provide the service for the first network function network element.

33. The method according to claim 32, wherein the service request message further comprises the identifier of the first network function network element, the first token further comprises an identifier of the first network function network element and an identifier of the third network function network element, and performing, by the second network function network element, verification on the first token further comprises:
determining, by the second network function network element, whether the identifier of the third network function network element carried in the first token is the same as the identifier of the third network function network element carried in the CCA, and whether the identifier of the first network function network element carried in the first token is the same as the identifier of the first network function network element carried in the service request message; and
when the identifier of the first network function network element carried in the first token is the same as the identifier of the first network function network element carried in the CCA, and the identifier of the first network function network element carried in the first token is the same as the identifier of the first network function network element carried in the service request message, determining, by the second network function network element, that the verification on the first token succeeds.

34. The method according to claim 33, wherein the first token further comprises another verification condition, and the method further comprises:
determining, by the second network function network element based on the another verification condition, whether to provide the service for the first network function network element, wherein the another verification condition comprises one or more of the following:
an NF instance identifier of a service provider, an NF type of the service provider, single network slice selection assistance information of the service provider, a network slice instance identifier of the service provider, an expected identifier of an NF set to which the service provider belongs, an expected service name, and a validity time of the first token.

35. The method according to claim 34, wherein the method further comprises:
when verification based on the another verification condition succeeds, determining, by the second network function network element, that the verification on the first token succeeds.

36. The method according to claim 34 or 35, wherein the method further comprises:
when any one of the following conditions is met, determining, by the second network function network element, that the verification on the first token fails; and
rejecting, by the second network function network element, provision of the service for the first network function network element, wherein
the condition comprises one or more of the following:
the service area indicated by the second service domain information is outside the service area range indicated by the first service domain information;
the service area indicated by the second service domain information is outside the service area range indicated by the third service domain information;
the identifier of the third network function network element carried in the first token is different from the identifier of the third network function network element carried in the CCA;
the identifier of the first network function network element carried in the first token is different from the identifier of the first network function network element carried in the service request message; or
the verification based on the another verification condition fails.

37. The method according to any one of claims 24 to 36, wherein the service area indicated by the second service domain information is comprised in the service area range indicated by the first service domain information.

38. The method according to any one of claims 24 to 37, wherein the service comprises any one of the following: a data collection service or a model obtaining service; and
when the service is the data collection service, the first service domain information indicates an area range in which the first network function network element is capable of obtaining data from the second network function network element; or
when the service is the model obtaining service, the first service domain information indicates an area range in which the first network function network element is capable of obtaining a model from the second network function network element.

39. A communication apparatus, comprising one or more functional modules, wherein the one or more functional modules or network elements are configured to perform the method according to any one of claims 1 to 11, or the one or more functional modules or network elements are configured to perform the method according to any one of claims 12 to 18, or the one or more functional modules or network elements are configured to perform the method according to any one of claims 19 to 23.

40. A communication apparatus, comprising a processor, wherein the processor is coupled to a memory, and the processor is configured to execute a computer program stored in the memory, so that the communication apparatus performs the method according to any one of claims 1 to 11, or the communication apparatus performs the method according to any one of claims 12 to 18, or the communication apparatus performs the method according to any one of claims 19 to 23.

41. A communication system, comprising a first network function network element, a second network function network element, and an authorization function network element, wherein the second network function network element is configured to perform the method according to any one of claims 1 to 11, the first network function network element is configured to perform the method according to any one of claims 12 to 18, and the authorization function network element is configured to perform the method according to any one of claims 19 to 23.

42. A computer-readable storage medium, wherein the computer-readable storage medium stores a computer program, and when the computer program is run, a computer is caused to perform the method according to any one of claims 1 to 23.

43. A computer program product, wherein when the computer program product is executed by a communication apparatus, the method according to any one of claims 1 to 23 is implemented.
